# EUROPEAN PATENT APPLICATION

(11) **EP 4 727 134 A1**
(43) Date of publication of application: **15.04.2026**
(21) Application number: 24823401.5
(22) Date of filing: 12.06.2024
(51) Int. Cl.: H04N 19/597

(54) **DECODING DEVICE, DECODING METHOD, ENCODING DEVICE, ENCODING METHOD, AND DEVICE**

(30) Priority: 12.06.2023 US 202363472413 P
(71) Applicant: Panasonic Intellectual Property Corporation of America, Torrance, CA 90504 (US)
(72) Inventor: IGUCHI, Noritaka, Kadoma-shi, Osaka 571-0057 (JP); SUGIO, Toshiyasu, Kadoma-shi, Osaka 571-0057 (JP); NISHI, Takahiro, Kadoma-shi, Osaka 571-0057 (JP); ITO, Atsushi, Kadoma-shi, Osaka 571-0057 (JP)
(74) Representative: Grünecker Patent- und Rechtsanwälte PartG mbB
(86) International application number: PCT/JP2024/021298
(87) International publication number: WO 2024/257786

(57) **Abstract**

A decoding device (1320) includes circuitry (1321) and memory (1322) coupled to the circuitry (1321). In operation, the circuitry (1321): restores first vertices based on encoded data (S1311); generates first face information including a first face by connecting the first vertices restored (S1313); restores second vertices based on the encoded data and the first face (S1314); generates second face information including a second face by connecting a point cloud including the first vertices restored and the second vertices restored (S1315); and outputs the first vertices, the second vertices, the first face information, and the second face information (S1316).

## Description

### [Technical Field]

The present disclosure relates to, for example, a decoding device, a decoding method, an encoding device, an encoding method, and a device.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Summary of Invention]

### [Technical Problem]

An object of the present disclosure is to provide a decoding device and the like that enable outputting three-dimensional data of different resolutions.

### [Solution to Problem]

A decoding device according to one aspect of the present disclosure includes circuitry and memory coupled to the circuitry. In operation, the circuitry: obtains encoded data; restores first vertices based on the encoded data; generates first face information including a first face by connecting the first vertices restored; restores second vertices based on the encoded data and the first face; generates second face information including a second face by connecting a point cloud including the first vertices restored and the second vertices restored; and outputs the first vertices, the second vertices, the first face information, and the second face information.

An encoding device according to one aspect of the present disclosure includes circuitry and memory coupled to the circuitry. In operation, the circuitry: determines first vertices of a three-dimensional object; generates first face information including a first face by connecting the first vertices; determines second vertices based on the first face; generates second face information including a second face by connecting a point cloud including the first vertices and the second vertices; and generates encoded data including the first vertices, the second vertices, the first face information, and the second face information.

A device according to one aspect of the present disclosure includes circuitry and memory coupled to the circuitry. In operation, the circuitry: determines a type of three-dimensional data to be decoded; and extracts, from encoded data, three-dimensional data of the type determined. The encoded data includes: (i) first vertices of a three-dimensional object; (ii) first face information including a first face generated by connecting the first vertices; (iii) second vertices determined based on the first face; and (iv) a second face generated by connecting a point cloud including the first vertices and the second vertices. The type of three-dimensional data to be extracted includes a first format and a second format. When the type of three-dimensional data to be decoded is determined to be the first format, first encoded data including the first vertices and the first face information is extracted, and when the type of three-dimensional data to be decoded is determined to be the second format, second encoded data including enhancement information for decoding the second vertices and the second face is extracted.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

### [Advantageous Effects of Invention]

A decoding device and the like according to the present disclosure enable outputting three-dimensional data of different resolutions.

### [Brief Description of Drawings]

[FIG. 1]

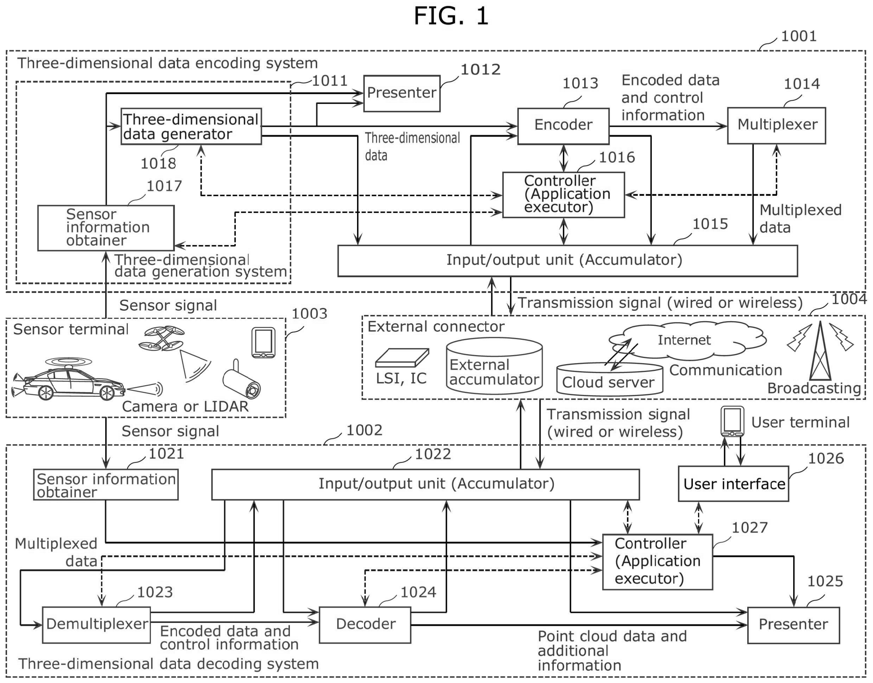

   FIG. 1 is a diagram illustrating a configuration example of a three-dimensional data encoding and decoding system according to an embodiment in Embodiment 1.
[FIG. 2]

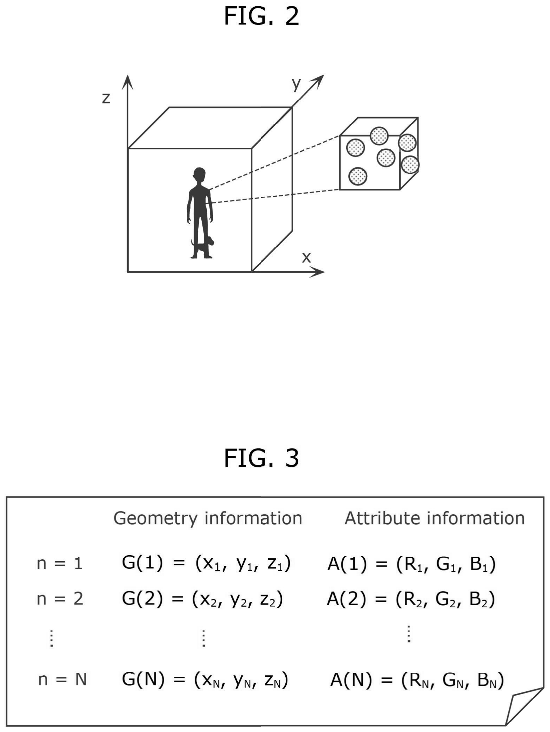

   FIG. 2 is a diagram illustrating an example of point cloud data in Embodiment 1.
[FIG. 3]
   FIG. 3 is a diagram illustrating a configuration example of a data file describing information of the point cloud data in Embodiment 1.
[FIG. 4]

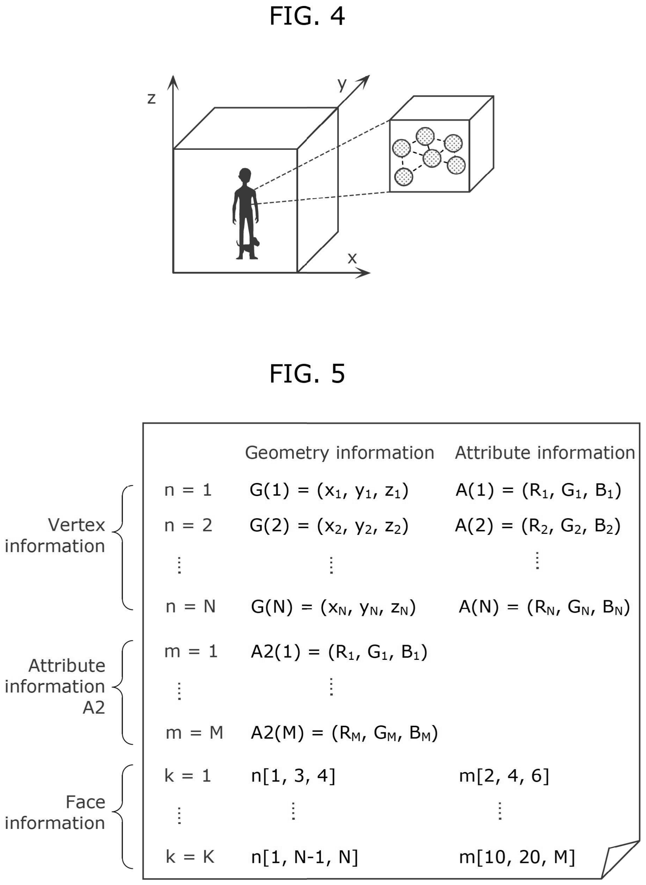

   FIG. 4 is a diagram illustrating the configuration of three-dimensional mesh data in Embodiment 1.
[FIG. 5]
   FIG. 5 is a diagram illustrating a configuration example of a data file describing information of the three-dimensional mesh data in Embodiment 1.
[FIG. 6]

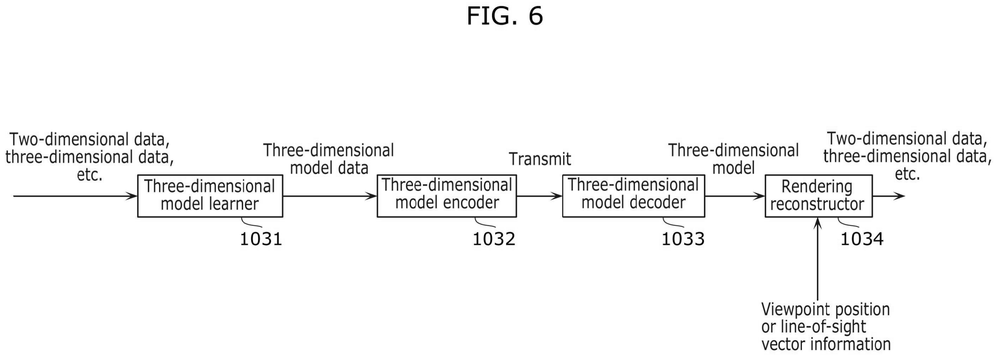

   FIG. 6 is a diagram for describing a three-dimensional model in Embodiment 1.
[FIG. 7]

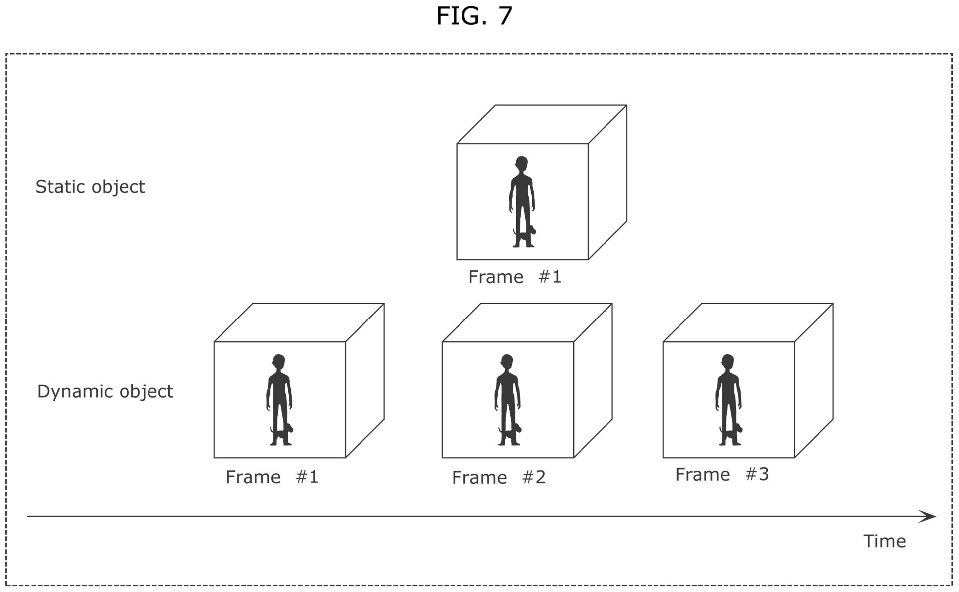

   FIG. 7 is a diagram illustrating types of three-dimensional data in Embodiment 1.
[FIG. 8]

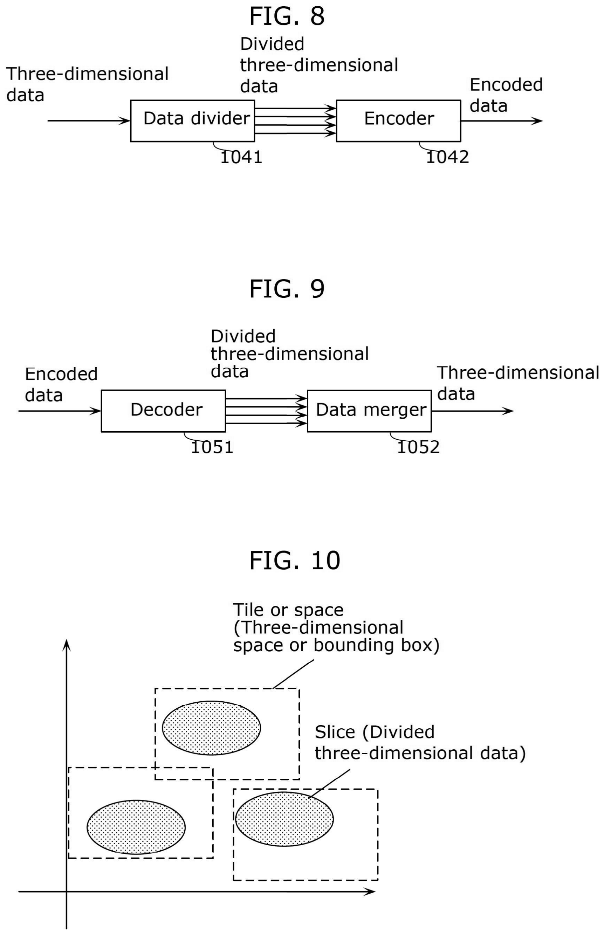

   FIG. 8 is a diagram for describing encoding processing of three-dimensional data in Embodiment 1.
[FIG. 9]
   FIG. 9 is a diagram for describing decoding processing of three-dimensional data in Embodiment 1.
[FIG. 10]
   FIG. 10 is a diagram two-dimensionally and schematically illustrating tiles and slices of three-dimensional data in Embodiment 1.
[FIG. 11]

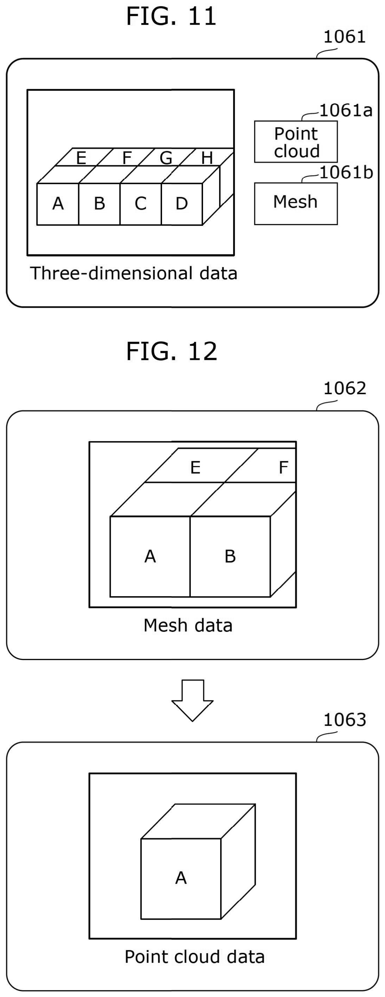

   FIG. 11 is a diagram illustrating an example of a terminal presentation screen that is switchable according to a request of a user in Embodiment 1.
[FIG. 12]
   FIG. 12 is a diagram illustrating an example of terminal presentation screens that are automatically switchable according to an operation by the user in Embodiment 1.
[FIG. 13]

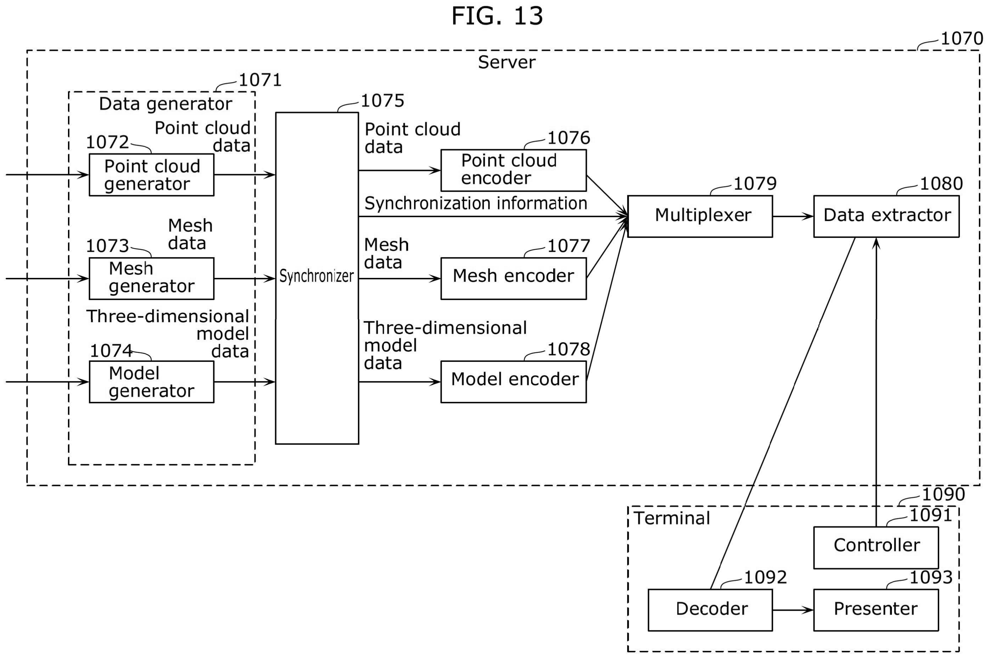

   FIG. 13 is a block diagram illustrating an example of the functional configuration of a server and a terminal in Embodiment 1.
[FIG. 14]

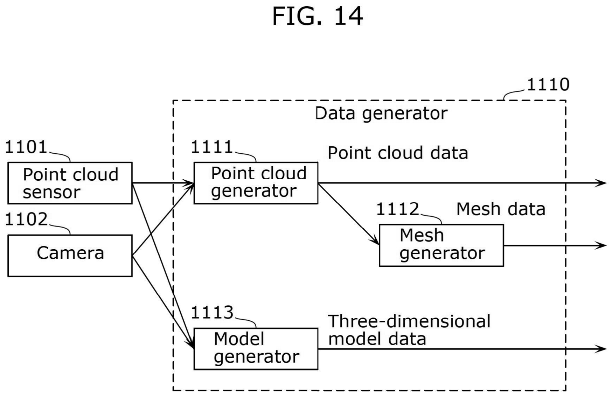

   FIG. 14 is a block diagram illustrating another example of a data generator of a server in Embodiment 1.
[FIG. 15]

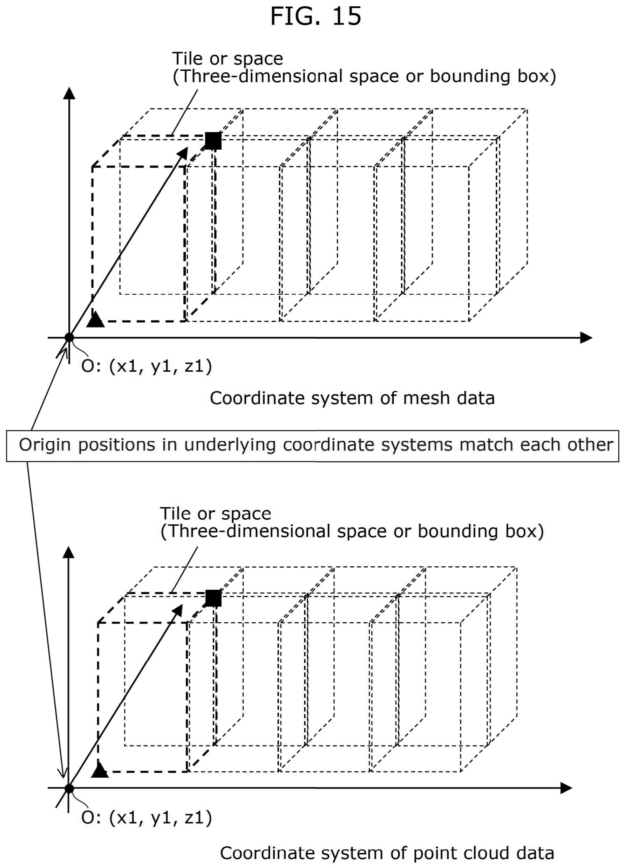

   FIG. 15 is a diagram for describing synchronization processing of coordinate systems in Embodiment 1.
[FIG. 16]

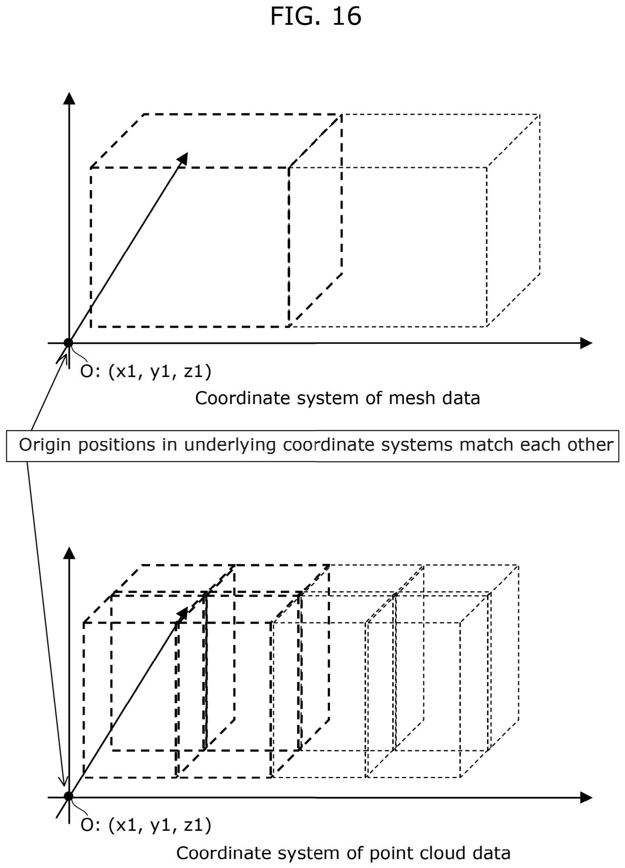

   FIG. 16 is a diagram for describing synchronization processing of coordinate systems in Embodiment 1.
[FIG. 17]

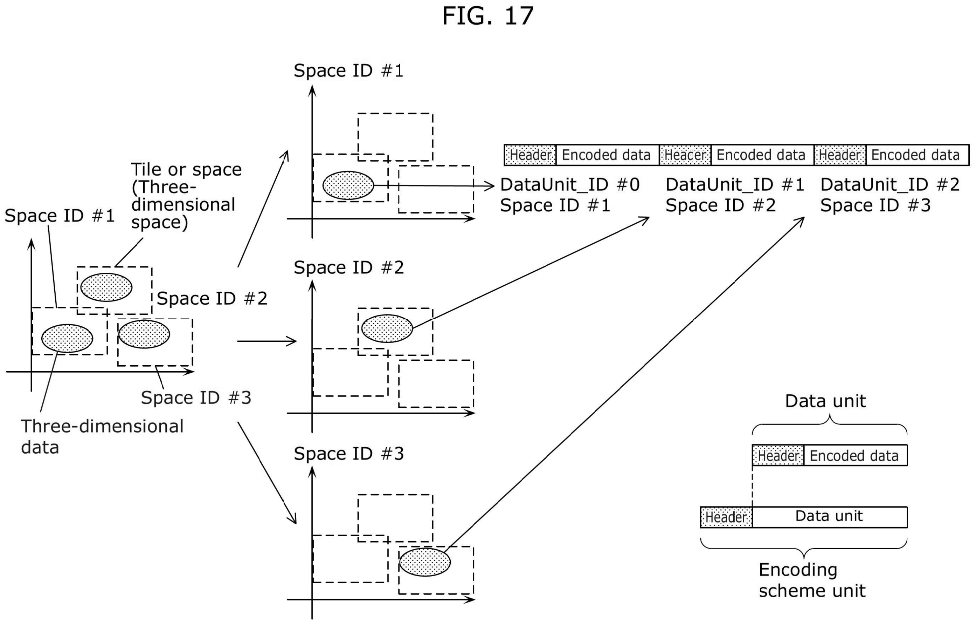

   FIG. 17 is a diagram for describing the relationship between a three-dimensional space and encoded data in Embodiment 1.
[FIG. 18]

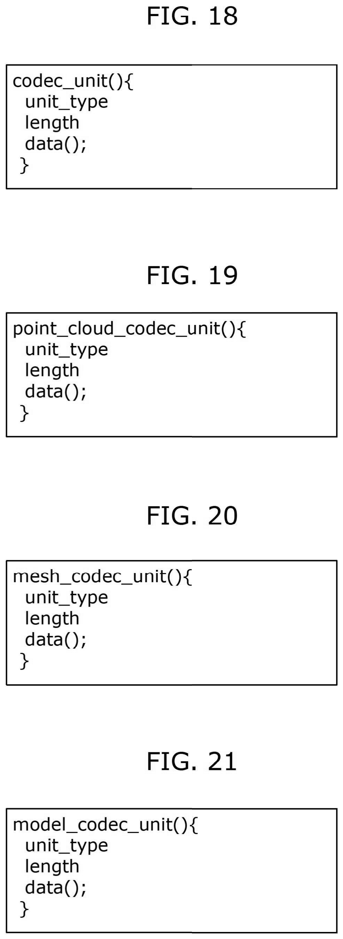

   FIG. 18 is a diagram illustrating an example of syntax of an encoding scheme unit in Embodiment 1.
[FIG. 19]
   FIG. 19 is a diagram illustrating an example of syntax of an encoded point cloud in Embodiment 1.
[FIG. 20]
   FIG. 20 is a diagram illustrating an example of syntax of an encoded mesh in Embodiment 1.
[FIG. 21]
   FIG. 21 is a diagram illustrating an example of syntax of an encoded three-dimensional model in Embodiment 1.
[FIG. 22]

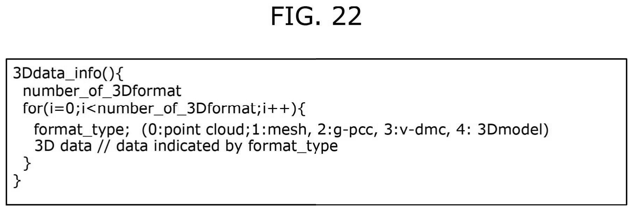

   FIG. 22 is a diagram illustrating an example of syntax of three-dimensional data information in Embodiment 1.
[FIG. 23]

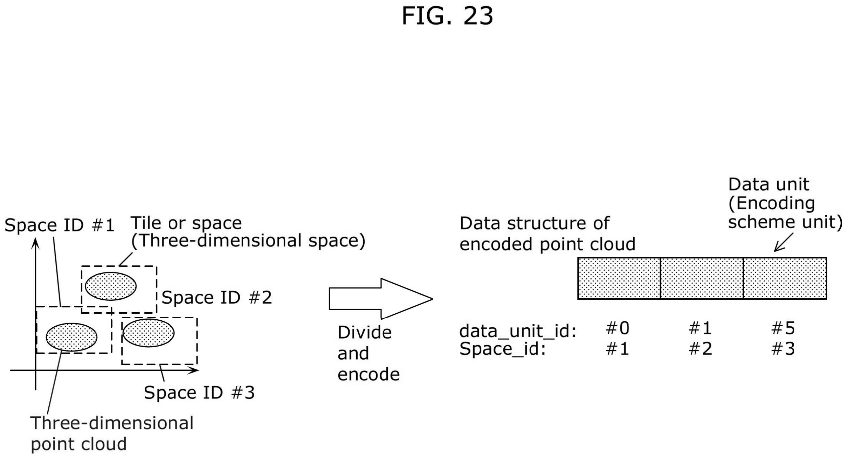

   FIG. 23 is a diagram for describing the data structure of an encoded point cloud in Embodiment 1.
[FIG. 24]

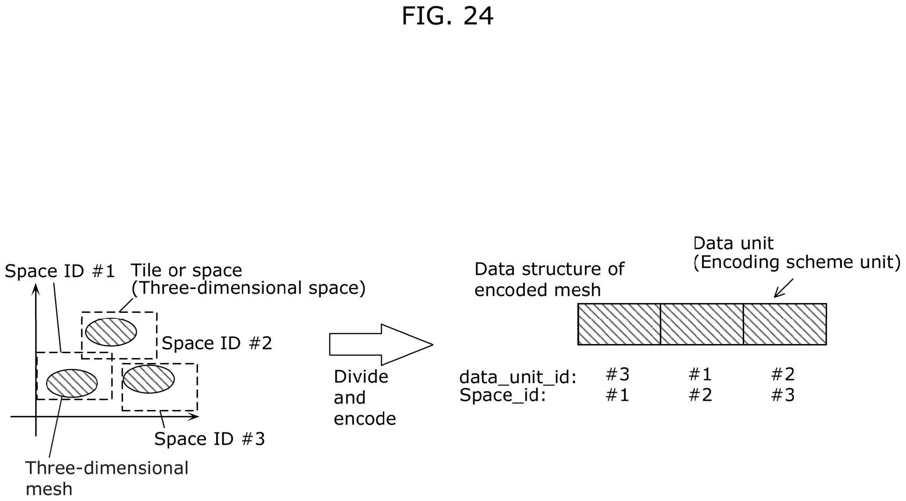

   FIG. 24 is a diagram for describing the data structure of an encoded mesh in Embodiment 1.
[FIG. 25]

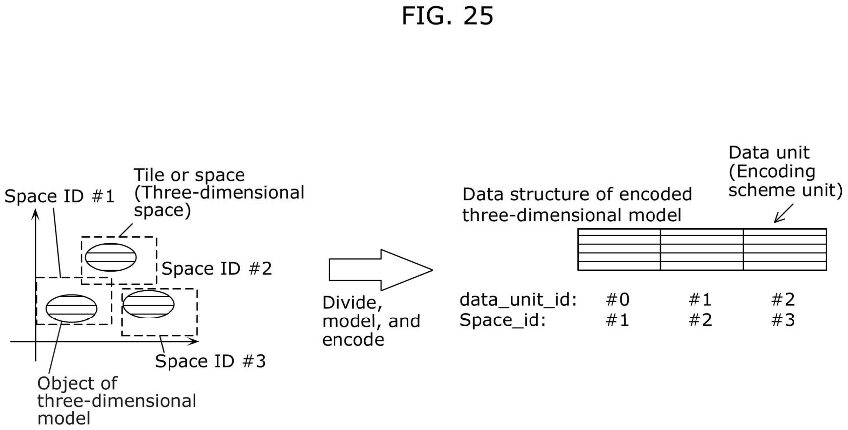

   FIG. 25 is a diagram for describing the data structure of an encoded three-dimensional model in Embodiment 1.
[FIG. 26]

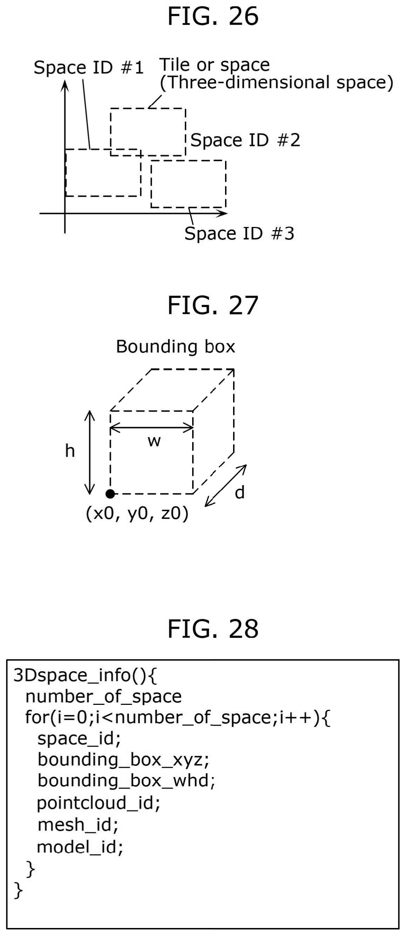

   FIG. 26 is a diagram two-dimensionally illustrating an example of a plurality of three-dimensional spaces in Embodiment 1.
[FIG. 27]
   FIG. 27 is a diagram illustrating an example of a bounding box in Embodiment 1.
[FIG. 28]
   FIG. 28 is a diagram illustrating an example of syntax of three-dimensional space information in Embodiment 1.
[FIG. 29]

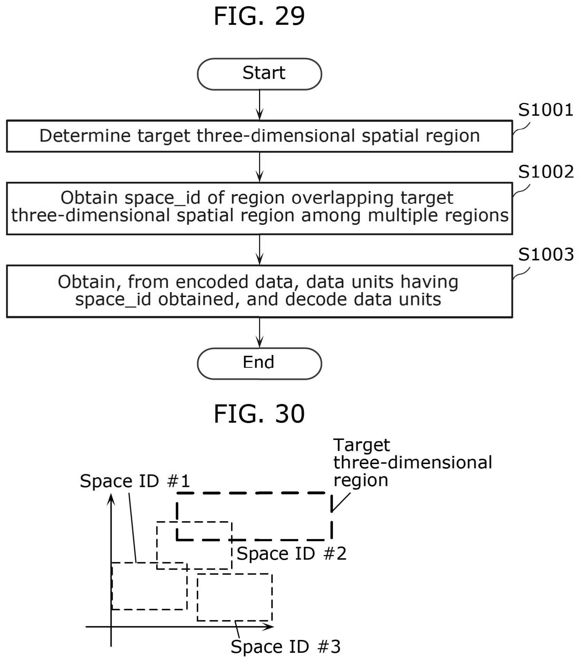

   FIG. 29 is a flowchart illustrating an example of partial decoding in Embodiment 1.
[FIG.30]
   FIG. 30 is a diagram illustrating an example of a three-dimensional spatial region that is to be the target of partial decoding in Embodiment 1.
[FIG. 31]

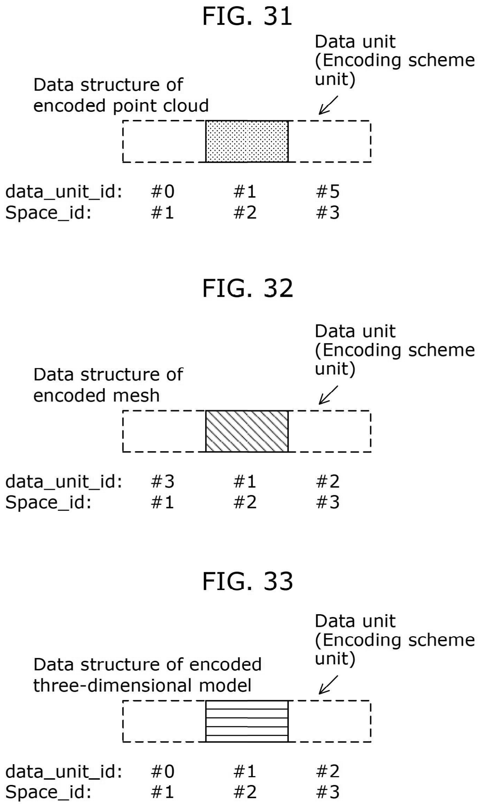

   FIG. 31 is a diagram illustrating an example of the data structure of an encoded point cloud that is to undergo partial decoding in Embodiment 1.
[FIG. 32]
   FIG. 32 is a diagram illustrating an example of the data structure of an encoded mesh that is to undergo partial decoding in Embodiment 1.
[FIG. 33]
   FIG. 33 is a diagram illustrating an example of the data structure of an encoded three-dimensional model that is to undergo partial decoding in Embodiment 1.
[FIG. 34]

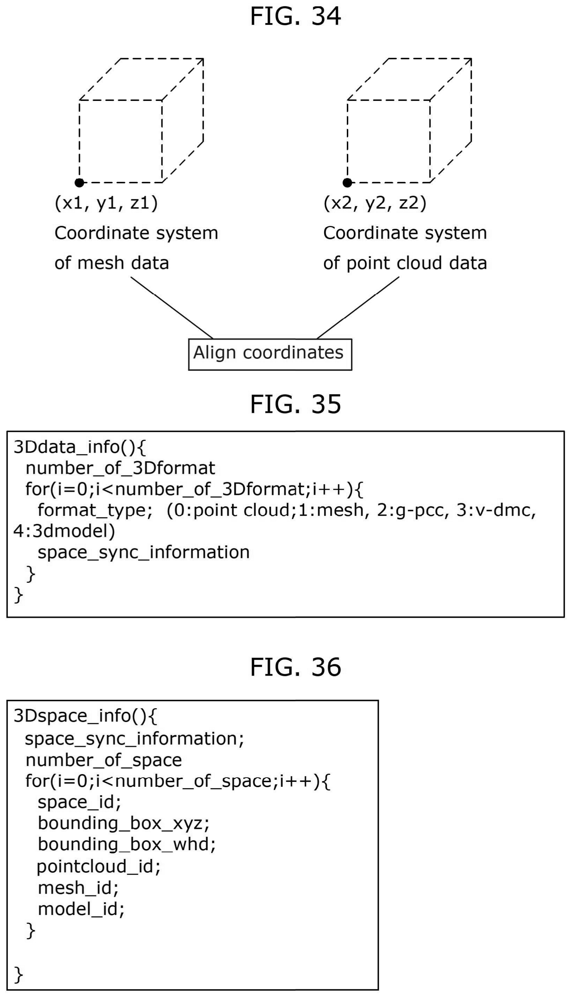

   FIG. 34 is a diagram illustrating an example of coordinate systems of different types of three-dimensional data that are not spatially synchronized in Embodiment 1.
[FIG. 35]
   FIG. 35 is a diagram illustrating an example of syntax of three-dimensional data information in Embodiment 1.
[FIG. 36]
   FIG. 36 is a diagram illustrating an example of syntax of three-dimensional space information in Embodiment 1.
[FIG. 37]

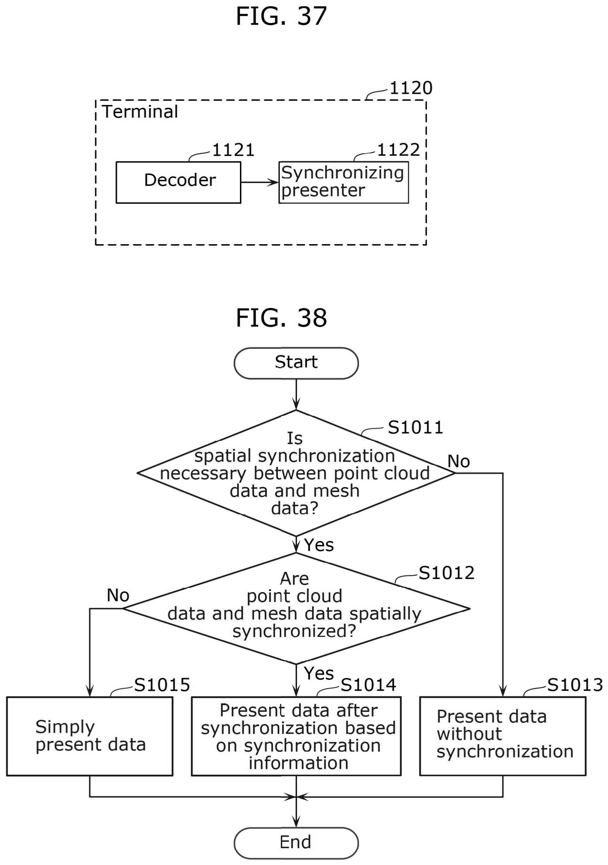

   FIG. 37 is a diagram illustrating an example of the functional configuration of the terminal in Embodiment 1.
[FIG. 38]
   FIG. 38 is a flowchart illustrating an example of spatial synchronization processing in Embodiment 1.
[FIG. 39]

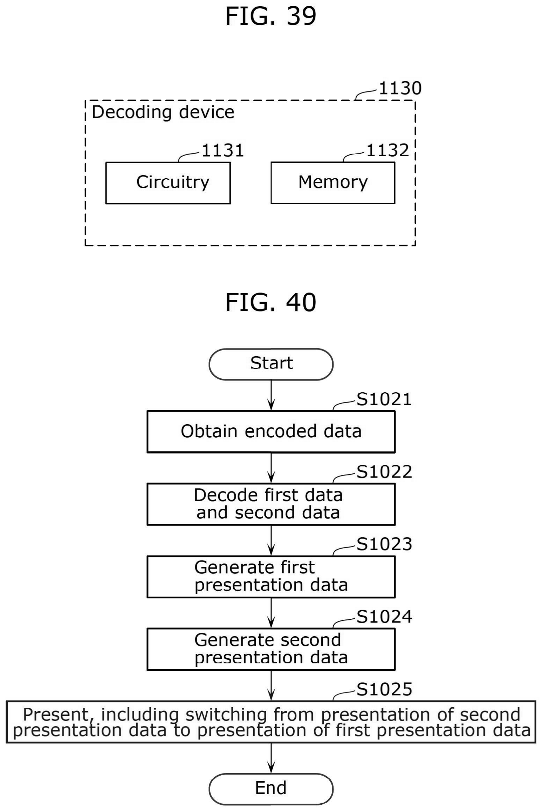

   FIG. 39 is a diagram illustrating an example of the configuration of a decoding device in Embodiment 1.
[FIG. 40]
   FIG. 40 is a flowchart illustrating an example of a decoding method performed by the decoding device in Embodiment 1.
[FIG. 41]

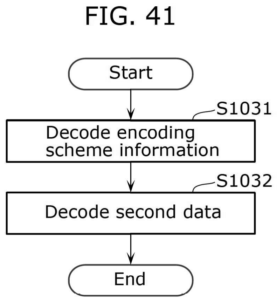

   FIG. 41 is a flowchart illustrating another example of a decoding method performed by the decoding device in Embodiment 1.
[FIG. 42]

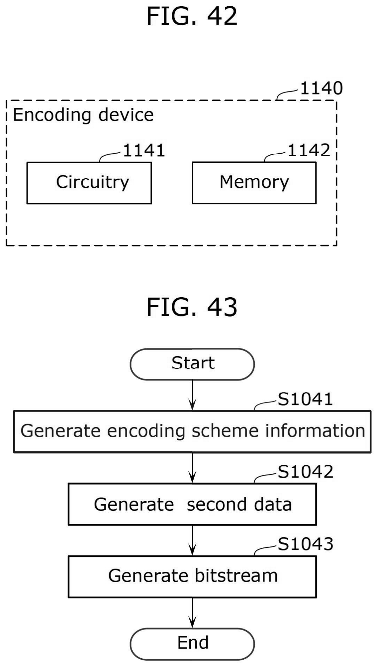

   FIG. 42 is a diagram illustrating an example of the configuration of an encoding device in Embodiment 1.
[FIG. 43]
   FIG. 43 is a flowchart illustrating an example of an encoding method performed by the encoding device in Embodiment 1.
[FIG. 44]

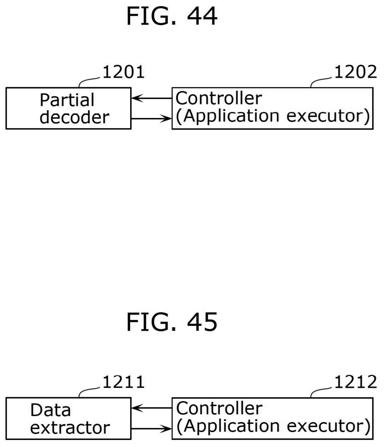

   FIG. 44 is a diagram for describing partial decoding for decoding a portion of three-dimensional data in Embodiment 2.
[FIG. 45]
   FIG. 45 is a diagram for describing an example of extracting and decoding a portion of three-dimensional data in Embodiment 2.
[FIG. 46]

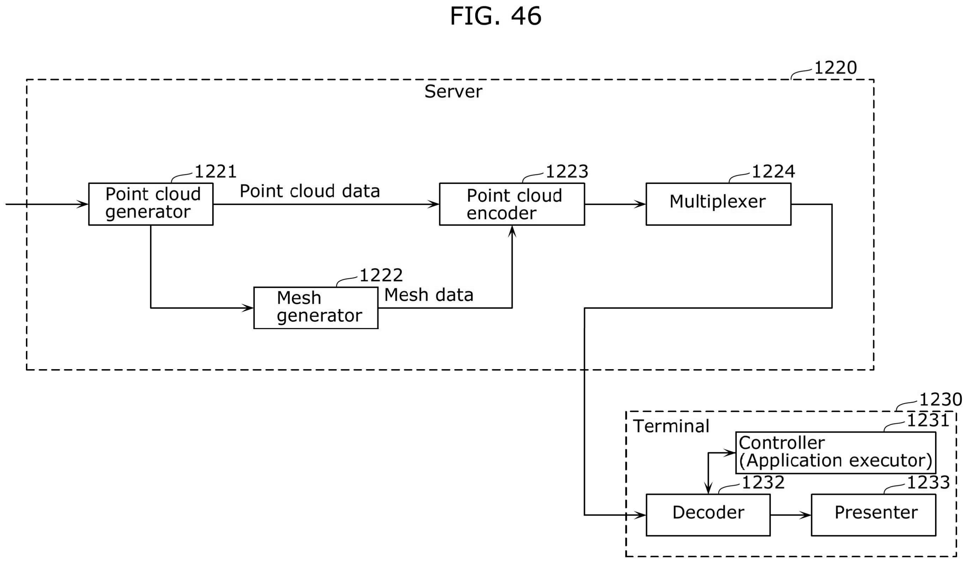

   FIG. 46 is a block diagram illustrating an example of the functional configuration of a server and a terminal in Embodiment 2.
[FIG. 47]

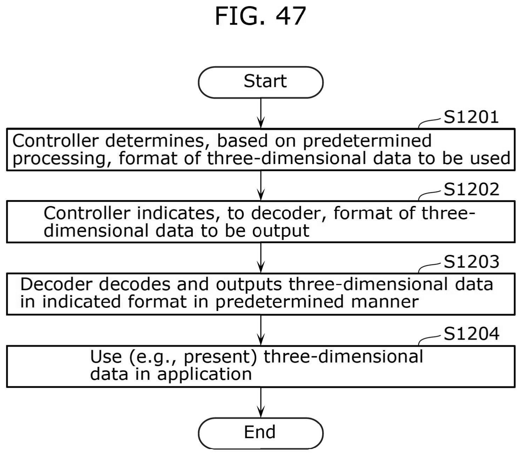

   FIG. 47 is a flowchart illustrating an example of processing performed by the terminal in Embodiment 2.
[FIG. 48]

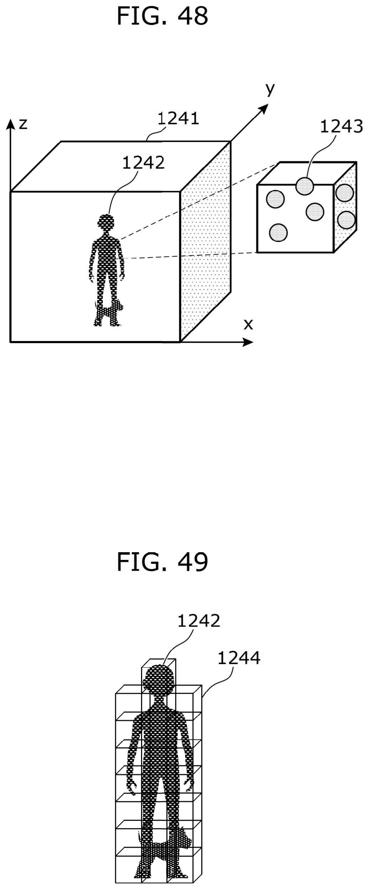

   FIG. 48 is a diagram illustrating an example of an original point cloud in Embodiment 2.
[FIG. 49]
   FIG. 49 is a diagram illustrating an example of a pruned octree in Embodiment 2.
[FIG. 50]

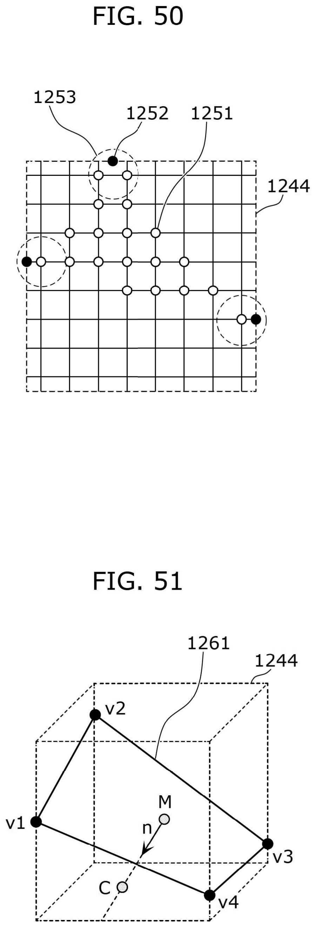

   FIG. 50 is a diagram illustrating an example of two-dimensional display of a leaf node in Embodiment 2.
[FIG. 51]
   FIG. 51 is a diagram for describing a method of generating a centroid vertex in Embodiment 2.
[FIG. 52]

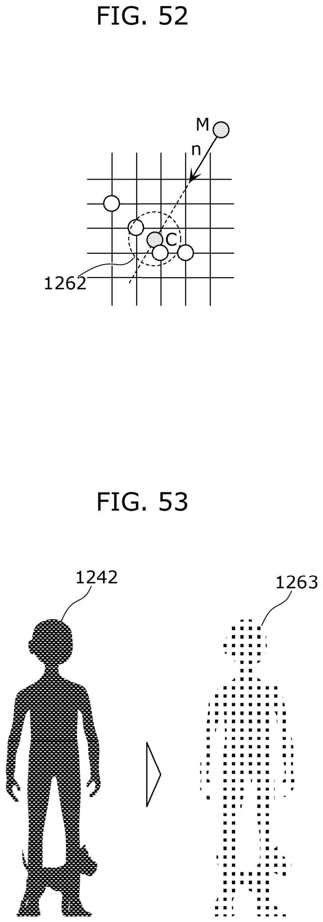

   FIG. 52 is a diagram for describing a method of generating a centroid vertex in Embodiment 2.
[FIG. 53]
   FIG. 53 is a diagram illustrating an example of vertex information in Embodiment 2.
[FIG. 54]

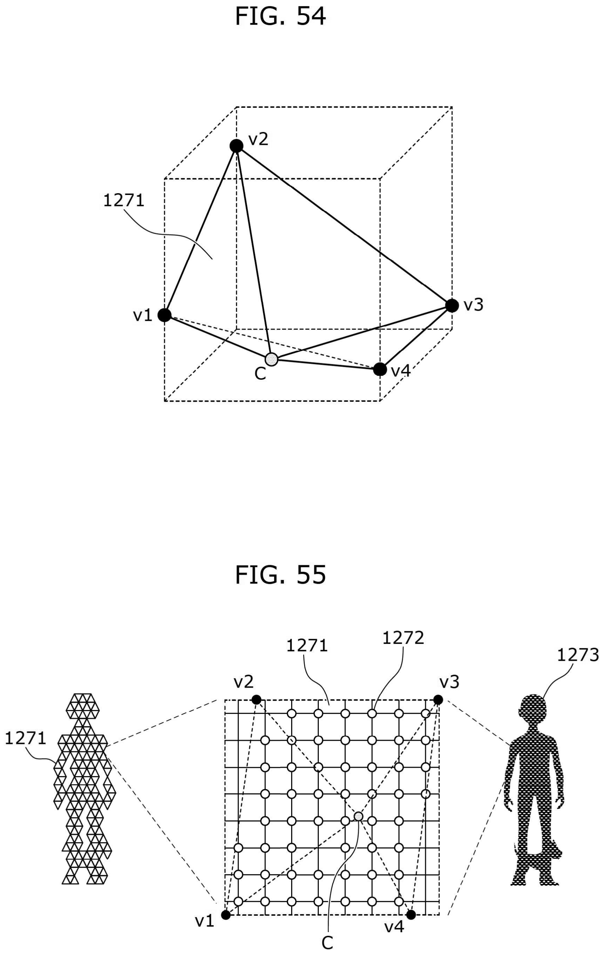

   FIG. 54 is a diagram illustrating an example of a TriSoup surface in Embodiment 2.
[FIG. 55]
   FIG. 55 is a diagram for describing point cloud restoration processing in Embodiment 2.
[FIG. 56]

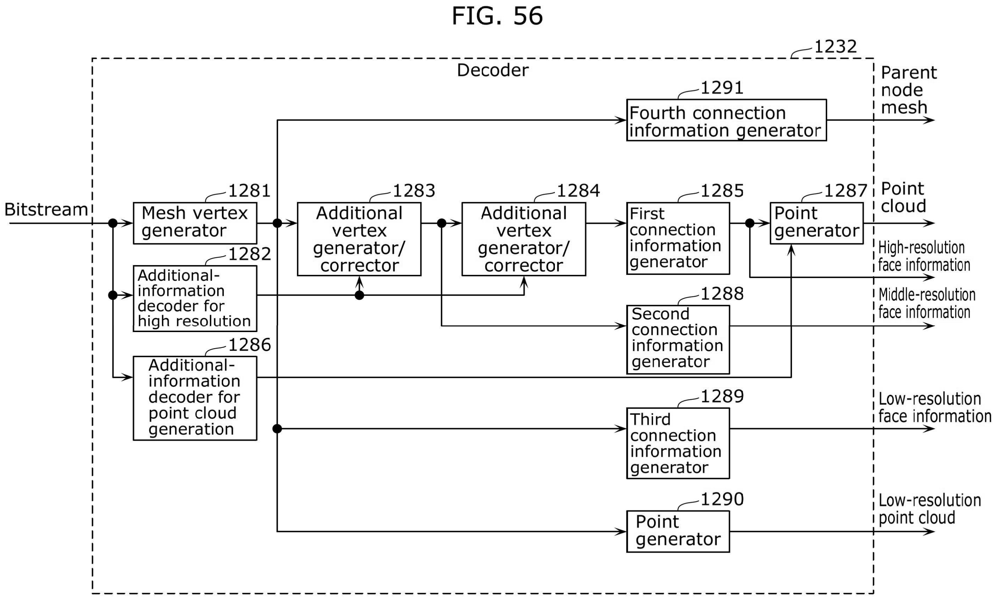

   FIG. 56 is a diagram illustrating an example of the configuration of a decoder in Embodiment 2.
[FIG. 57]

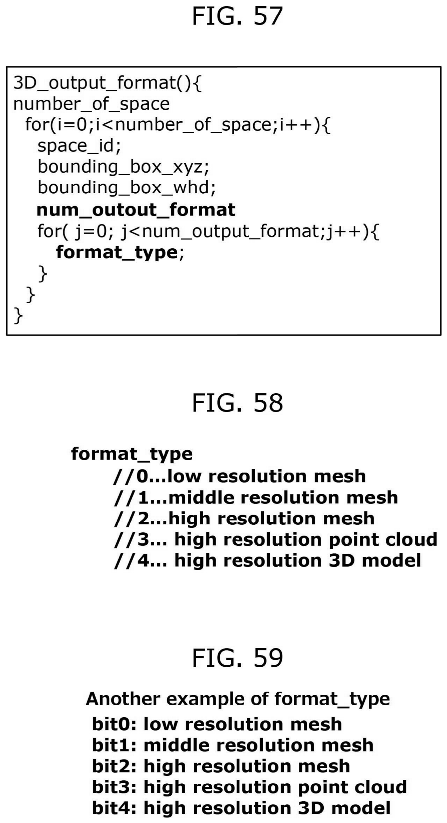

   FIG. 57 is a diagram illustrating an example of the syntax of metadata (supplemental enhancement information (SEI)) of available output formats in Embodiment 2.
[FIG. 58]
   FIG. 58 is a diagram illustrating an example of format_type in Embodiment 2.
[FIG. 59]
   FIG. 59 is a diagram illustrating another example of format_type in Embodiment 2.
[FIG. 60]

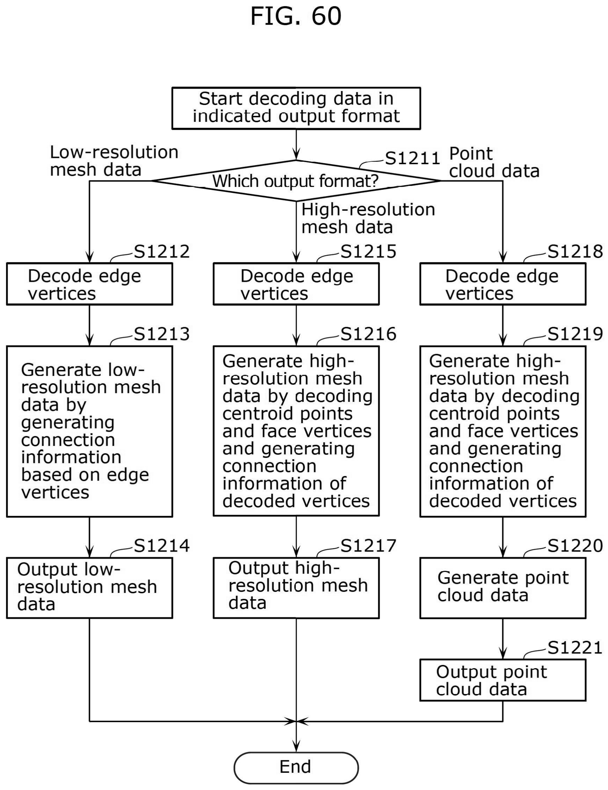

   FIG. 60 is a flowchart illustrating an example of detailed processing of decoding three-dimensional data in an indicated format in a predetermined manner in Embodiment 2.
[FIG. 61]

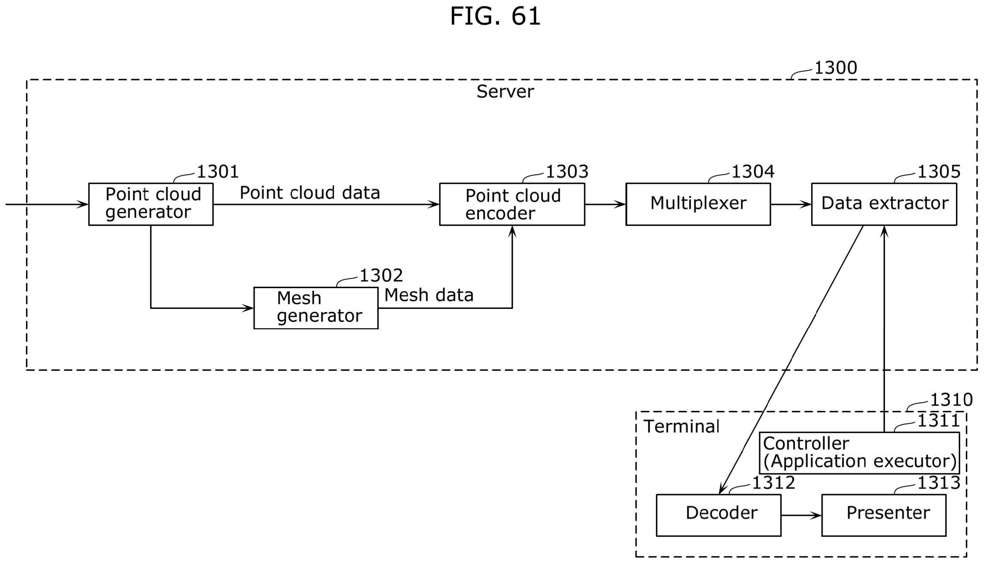

   FIG. 61 is a block diagram illustrating another example of the functional configuration of the server and the terminal in Embodiment 2.
[FIG. 62]

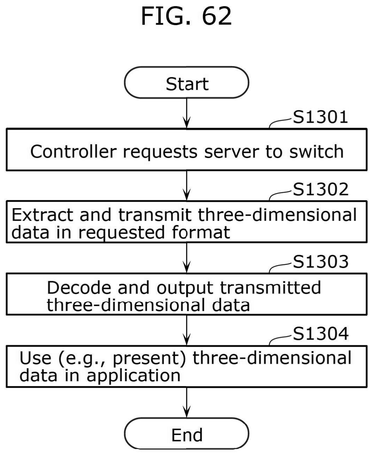

   FIG. 62 is a flowchart illustrating another example of processing performed by the terminal in Embodiment 2.
[FIG. 63]

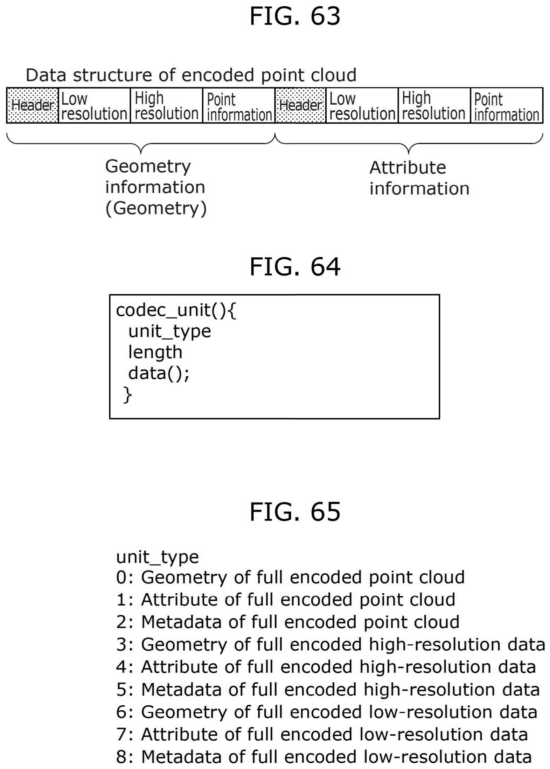

   FIG. 63 is a diagram illustrating an example of the structure of a data unit in Embodiment 2.
[FIG. 64]
   FIG. 64 is a diagram illustrating an example of the syntax of an encoding scheme unit in Embodiment 2.
[FIG. 65]
   FIG. 65 is a diagram illustrating an example of type information in Embodiment 2.
[FIG. 66]

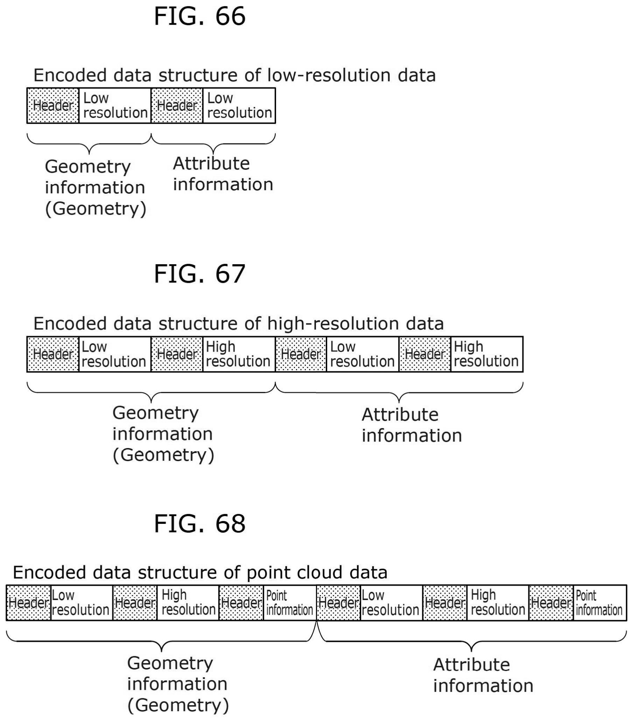

   FIG. 66 is a diagram illustrating an example of a data unit structure for partial transmission in Embodiment 2.
[FIG. 67]
   FIG. 67 is a diagram illustrating an example of a data unit structure for partial transmission in Embodiment 2.
[FIG. 68]
   FIG. 68 is a diagram illustrating an example of a data unit structure for partial transmission in Embodiment 2.
[FIG. 69]

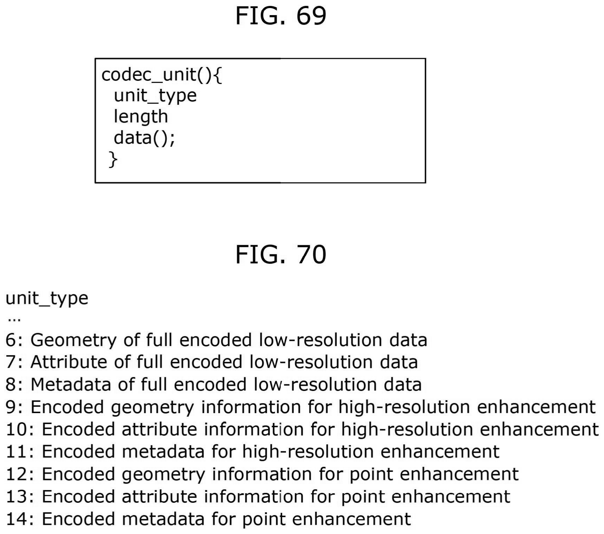

   FIG. 69 is a diagram illustrating an example of the syntax of an encoding scheme unit for partial transmission in Embodiment 2.
[FIG. 70]
   FIG. 70 is a diagram illustrating an example of type information for partial transmission in Embodiment 2.
[FIG. 71]

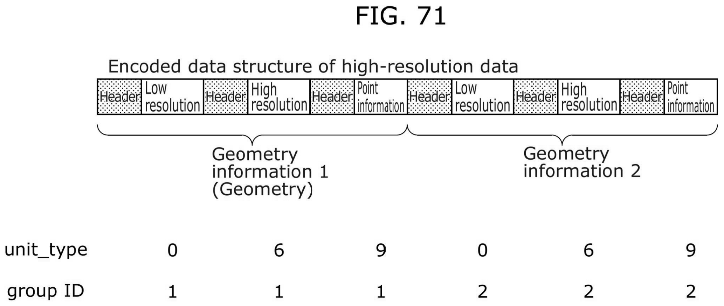

   FIG. 71 is a diagram for describing group IDs in Embodiment 2.
[FIG. 72]

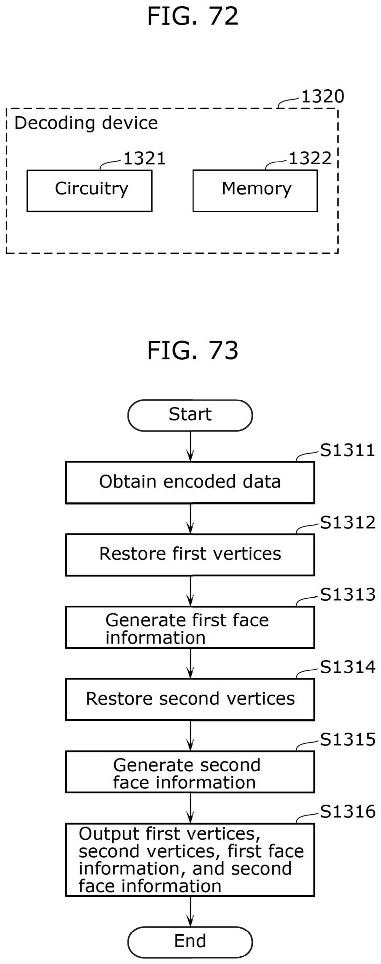

   FIG. 72 is a diagram illustrating an example of the configuration of a decoding device in Embodiment 2.
[FIG. 73]
   FIG. 73 is a flowchart illustrating an example of a decoding method performed by the decoding device in Embodiment 2.
[FIG. 74]

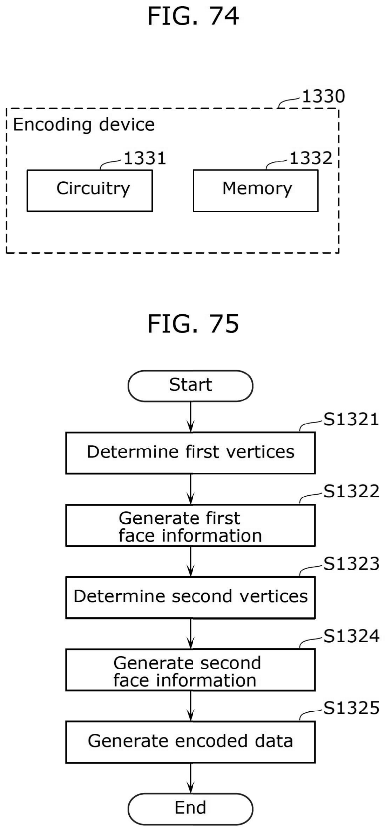

   FIG. 74 is a diagram illustrating an example of the configuration of an encoding device in Embodiment 2.
[FIG. 75]
   FIG. 75 is a flowchart illustrating an example of an encoding method performed by the encoding device in Embodiment 2.
[FIG. 76]

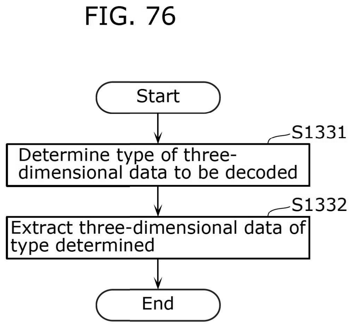

   FIG. 76 is a flowchart illustrating an example of a method performed by the decoding device or the encoding device in Embodiment 2.

### [Description of Embodiments]

A decoding device according to a first aspect of the present disclosure includes circuitry and memory coupled to the circuitry. In operation, the circuitry: obtains encoded data; restores first vertices based on the encoded data; generates first face information including a first face by connecting the first vertices restored; restores second vertices based on the encoded data and the first face; generates second face information including a second face by connecting a point cloud including the first vertices restored and the second vertices restored; and outputs the first vertices, the second vertices, the first face information, and the second face information.

Thus, low-resolution information that includes the first vertices and the first face information and high-resolution information that includes the second vertices and the second face information are generated in two steps and output. This enables, for example, outputting low-resolution three-dimensional data based on the low-resolution information, or outputting high-resolution three-dimensional data of a resolution higher than that of the low-resolution three-dimensional data, based on both the low-resolution information and the high-resolution information.

A decoding device according to a second aspect of the present disclosure is the decoding device according to the first aspect, in which the circuitry further: generates, based on the second face, point cloud data including points; and outputs the point cloud data.

A decoding device according to a third aspect of the present disclosure is the decoding device according to the first aspect or the second aspect, in which the encoded data includes: first encoded data including the first vertices and the first face information; and second encoded data including enhancement information for decoding the second vertices and the second face.

A decoding device according to a fourth aspect of the present disclosure is the decoding device according to the third aspect, in which the encoded data includes a header and a data unit, and the data unit includes the first encoded data and the second encoded data in order.

A decoding device according to a fifth aspect of the present disclosure is the decoding device according to the third aspect, in which the encoded data includes: a first data unit including a first header and the first encoded data; and a second data unit including a second header and the second encoded data.

A decoding device according to a sixth aspect of the present disclosure is the decoding device according to the third aspect, in which the circuitry further: partly decodes the first encoded data and the second encoded data, and outputs decoded one of (i) the first encoded data or (ii) the first encoded data and the second encoded data.

A decoding device according to a seventh aspect of the present disclosure is the decoding device according to the sixth aspect, in which the circuitry further: obtains number information indicating a total number of available formats; and determines, based on the number information, data to be output.

A decoding device according to an eighth aspect of the present disclosure is the decoding device according to the sixth aspect, in which the circuitry further: obtains type information indicating a type of an available format; and determines, based on the type information, data to be output.

A decoding device according to a ninth aspect of the present disclosure is the decoding device according to the third aspect, in which the circuitry further: obtains one of (i) the first encoded data or (ii) the first encoded data and the second encoded data; and decodes and outputs obtained one of (i) the first encoded data or (ii) the first encoded data and the second encoded data.

An encoding device according to a tenth aspect includes circuitry and memory coupled to the circuitry. In operation, the circuitry: determines first vertices of a three-dimensional object; generates first face information including a first face by connecting the first vertices; determines second vertices based on the first face; generates second face information including a second face by connecting a point cloud including the first vertices and the second vertices; and generates encoded data including the first vertices, the second vertices, the first face information, and the second face information.

Thus, the encoding device outputs the encoded data obtained in two steps by generating low-resolution information that includes the first vertices and the first face information and high-resolution information that includes the second vertices and the second face information. A decoding device that obtains the encoded data can therefore output, for example, low-resolution three-dimensional data based on the low-resolution information, or high-resolution three-dimensional data of a resolution higher than that of the low-resolution three-dimensional data, based on both the low-resolution information and the high-resolution information.

An encoding device according to an eleventh aspect of the present disclosure is the encoding device according to the tenth aspect, in which the circuitry further: generates, based on the second face, point cloud data including points, and the encoded data further includes the point cloud data.

An encoding device according to a twelfth aspect of the present disclosure is the encoding device according to the tenth aspect, in which the circuitry further: generates first encoded data including the first vertices and the first face information; and generates second encoded data including the second vertices and the second face information, and the encoded data includes the first encoded data and the second encoded data.

Thus, the decoding device that obtains the encoded data can restore three-dimensional data items of different resolutions.

An encoding device according to a thirteenth aspect of the present disclosure is the encoding device according to the twelfth aspect, in which the encoded data includes a header and a data unit, and the data unit includes the first encoded data and the second encoded data in order.

An encoding device according to a fourteenth aspect of the present disclosure is the encoding device according to the twelfth aspect, in which the encoded data includes: a first data unit including a first header and the first encoded data; and a second data unit including a second header and the second encoded data.

An encoding device according to a fifteenth aspect of the present disclosure is the encoding device according to the fourteenth aspect, in which the encoded data further includes number information indicating a total number of available formats.

An encoding device according to a sixteenth aspect of the present disclosure is the encoding device according to the fourteenth aspect, in which the encoded data further includes type information indicating a type of an available format.

An encoding device according to a seventeenth aspect of the present disclosure is the encoding device according to the tenth aspect, in which the circuitry further: outputs one of (i) the first encoded data or (ii) the first encoded data and the second encoded data.

A decoding method according to an eighteenth aspect of the present disclosure includes: restoring first vertices based on encoded data; generating first face information including a first face by connecting the first vertices restored; restoring second vertices based on the encoded data and the first face; generating second face information including a second face by connecting a point cloud including the first vertices restored and the second vertices restored; and outputting the first vertices, the second vertices, the first face information, and the second face information.

Thus, low-resolution information that includes the first vertices and the first face information and high-resolution information that includes the second vertices and the second face information are generated in two steps and output. This enables, for example, outputting low-resolution three-dimensional data based on the low-resolution information, or outputting high-resolution three-dimensional data of a resolution higher than that of the low-resolution three-dimensional data, based on both the low-resolution information and the high-resolution information.

An encoding method according to a nineteenth aspect of the present disclosure includes: determining first vertices of a three-dimensional object; generating first face information including a first face by connecting the first vertices; determining second vertices based on the first face; generating second face information including a second face by connecting a point cloud including the first vertices and the second vertices; and generating encoded data including the first vertices, the second vertices, the first face information, and the second face information.

Thus, the encoding device outputs the encoded data obtained in two steps by generating low-resolution information that includes the first vertices and the first face information and high-resolution information that includes the second vertices and the second face information. A decoding device that obtains the encoded data can therefore output, for example, low-resolution three-dimensional data based on the low-resolution information, or high-resolution three-dimensional data of a resolution higher than that of the low-resolution three-dimensional data, based on both the low-resolution information and the high-resolution information.

A device according to a twentieth aspect of the present disclosure includes circuitry and memory coupled to the circuitry. In operation, the circuitry: determines a type of three-dimensional data to be decoded; and extracts, from encoded data, three-dimensional data of the type determined. The encoded data includes: (i) first vertices of a three-dimensional object; (ii) first face information including a first face generated by connecting the first vertices; (iii) second vertices determined based on the first face; and (iv) a second face generated by connecting a point cloud including the first vertices and the second vertices. The type of three-dimensional data to be extracted includes a first format and a second format. When the type of three-dimensional data to be decoded is determined to be the first format, first encoded data including the first vertices and the first face information is extracted, and when the type of three-dimensional data to be decoded is determined to be the second format, second encoded data including enhancement information for decoding the second vertices and the second face is extracted.

Thus, encoded data necessary for decoding can be extracted based on the determined format. Selecting a format requiring less data amount for decoding can therefore reduce data amount to be extracted. This enables, for example, reducing data traffic for transmitting the encoded data, and reducing the processing load of decoding processing performed by a decoding device that obtains the encoded data.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### [EMBODIMENT 1]

A configuration of a three-dimensional data encoding and decoding system according to this embodiment will be described. FIG. 1 is a diagram illustrating a configuration example of the three-dimensional data encoding and decoding system according to this embodiment. As shown in FIG. 1, the three-dimensional data encoding and decoding system includes three-dimensional data encoding system 1001, three-dimensional data decoding system 1002, sensor terminal 1003, and external connector 1004.

Three-dimensional data encoding system 1001 generates encoded data or multiplexed data by encoding three-dimensional data. Three-dimensional data encoding system 1001 may be a three-dimensional data encoding device implemented by a single device or a system implemented by a plurality of devices. The three-dimensional data encoding device may include a part of a plurality of processors included in three-dimensional data encoding system 1001.

Three-dimensional data encoding system 1001 includes three-dimensional data generation system 1011, presenter 1012, encoder 1013, multiplexer 1014, input/output unit 1015, and controller 1016. Three-dimensional data generation system 1011 includes sensor information obtainer 1017, and three-dimensional data generator 1018.

Sensor information obtainer 1017 obtains a sensor signal from sensor terminal 1003, and outputs the sensor signal to three-dimensional data generator 1018. Three-dimensional data generator 1018 generates three-dimensional data from the sensor signal, and outputs the three-dimensional data to encoder 1013.

Presenter 1012 presents the sensor signal or three-dimensional data to a user. For example, presenter 1012 displays information or an image based on the sensor signal or three-dimensional data.

Encoder 1013 encodes (compresses) the three-dimensional data, and outputs the resulting encoded data, control information obtained in the course of the encoding, and other additional information to multiplexer 1014. The additional information includes the sensor signal, for example.

Multiplexer 1014 generates multiplexed data by multiplexing the encoded data, the control information, and the additional information input thereto from encoder 1013. A format of the multiplexed data is a file format for accumulation or a packet format for transmission, for example.

Input/output unit 1015 (a communication unit or interface, for example) outputs the multiplexed data to the outside. Alternatively, the multiplexed data may be accumulated in an accumulator, such as an internal memory. Controller 1016 (or an application executor) controls each processor. That is, controller 1016 controls the encoding, the multiplexing, or other processing. Controller 1016 may control demultiplexing, decoding, or presentation.

Note that the sensor signal may be input to encoder 1013 or multiplexer 1014. Alternatively, input/output unit 1015 may output the three-dimensional data or encoded data to the outside as it is.

A transmission signal (multiplexed data) output from three-dimensional data encoding system 1001 is input to three-dimensional data decoding system 1002 via external connector 1004.

Three-dimensional data decoding system 1002 generates three-dimensional data, by decoding the encoded data or multiplexed data. Note that three-dimensional data decoding system 1002 may be a three-dimensional data decoding device implemented by a single device or a system implemented by a plurality of devices. The three-dimensional data decoding device may include a part of a plurality of processors included in three-dimensional data decoding system 1002.

Three-dimensional data decoding system 1002 includes sensor information obtainer 1021, input/output unit 1022, demultiplexer 1023, decoder 1024, presenter 1025, user interface 1026, and controller 1027.

Sensor information obtainer 1021 obtains a sensor signal from sensor terminal 1003.

Input/output unit 1022 obtains the transmission signal, decodes the transmission signal into the multiplexed data (file format or packet), and outputs the multiplexed data to demultiplexer 1023.

Demultiplexer 1023 obtains the encoded data, the control information, and the additional information from the multiplexed data, and outputs the encoded data, the control information, and the additional information to decoder 1024.

Decoder 1024 reconstructs point cloud data by decoding the encoded data.

Presenter 1025 presents the point cloud data to a user. For example, presenter 1025 displays information or an image based on the point cloud data. User interface 1026 obtains an indication based on a manipulation by the user. Controller 1027 (or an application executor) controls each processor. That is, controller 1027 controls the demultiplexing, the decoding, the presentation, or other processing.

Note that input/output unit 1022 may obtain the point cloud data or encoded data as it is from the outside. Presenter 1025 may obtain additional information, such as a sensor signal, and present information based on the additional information. Presenter 1025 may perform a presentation based on an instruction from a user obtained on user interface 1026.

Sensor terminal 1003 generates a sensor signal, which is information obtained by a sensor. Sensor terminal 1003 is a terminal provided with a sensor or a camera. For example, sensor terminal 1003 is a mobile body such as an automobile, a flying object such as an aircraft, a mobile terminal, or a camera.

Sensor signals that can be obtained by sensor terminal 1003 includes a signal indicating (1) the distance between sensor terminal 1003 and an object or the reflectance of the object obtained by LiDAR, a millimeter wave radar, or an infrared sensor or (2) the distance between a camera and an object or the reflectance of the object obtained by a plurality of monocular camera images or a stereo-camera image, for example. The sensor signal may include the posture, orientation, gyro (angular velocity), position (GPS information or altitude), velocity, or acceleration of the sensor, for example. The sensor signal may include air temperature, air pressure, air humidity, or magnetism, for example.

External connector 1004 is implemented by an integrated circuit (LSI or IC), an external accumulator, communication with a cloud server via the Internet, or broadcasting, for example.

Next, point cloud data will be described. FIG. 2 is a diagram illustrating a configuration of point cloud data. FIG. 3 is a diagram illustrating a configuration example of a data file describing information of the point cloud data.

Point cloud data includes data on a plurality of points. Data on each point includes geometry information (three-dimensional coordinates) and attribute information associated with the geometry information. A set of a plurality of such points is referred to as a point cloud. For example, a point cloud indicates a three-dimensional shape of an object.

Geometry information (position), such as three-dimensional coordinates, may be referred to as geometry. Data on each point may include attribute information (attribute) on a plurality of types of attributes. A type of attribute is color or reflectance, for example.

One item of attribute information may be associated with one item of geometry information, or attribute information on a plurality of different types of attributes may be associated with one item of geometry information. Furthermore, items of attribute information on the same type of attribute may be associated with one item of geometry information.

The configuration example of a data file illustrated in FIG. 3 is an example in which geometry information and attribute information are associated with each other in a one-to-one relationship, and geometry information and attribute information on N points forming point cloud data are shown.

The geometry information is information on three axes, specifically, an x-axis, a y-axis, and a z-axis, for example. The attribute information is RGB color information, for example. A representative data file is ply file, for example.

Next, three-dimensional mesh data will be described. FIG. 4 is a diagram illustrating the configuration of three-dimensional mesh data. FIG. 5 is a diagram illustrating a configuration example of a data file describing information of the three-dimensional mesh data.

Three-dimensional mesh data is in a data format used in computer graphics (CG) to represent the three-dimensional shape of an object as a collection of face information items. Each face information item represents a polygon such as a triangle or a quadrangle. Three-dimensional mesh data is also referred to as polygons or a polygon mesh.

Three-dimensional mesh data is composed of a set of the following elements: a three-dimensional point cloud; vertexes, which are three-dimensional points in the three-dimensional point cloud; edges, each connecting two vertexes at three-dimensional points; and faces surrounded by edges. The three-dimensional point cloud is a set of points that include geometry information in a three-dimensional space and attribute information corresponding to the geometry information. It should be noted that a three-dimensional point may be referred to simply as a point.

A vertex may have attribute information, such as color information, reflectance, and normal vector, related to the corresponding three-dimensional point. The relationship between vertexes that form an edge or a face may be represented by information called connectivity. It should be noted that a vertex may be referred to as a position. Which side of a face is the outer side may be represented by the direction of the normal vector with respect to three-dimensional points. Furthermore, a vertex may have attribute information related to the corresponding faces.

An exemplary form of mesh data file is an object file. A mesh data file as shown in FIG. 5 indicates vertex information, including geometry information G (1) to G (N) of N vertexes that constitute a mesh, and attribute information A (1) to A (N) of the vertexes. In a mesh data file, vertex information does not necessarily need to include attribute information.

In addition, attribute information does not necessarily need to be in one-to-one correspondence with vertexes. The mesh data file in FIG. 5 illustrates an example of three-dimensional mesh data having M attribute information items A2.

Face information is represented as combinations of vertex indexes; n [1, 3, 4] indicates a triangular face formed by three vertexes with n = 1, n = 3, and n = 4.

Furthermore, m [2, 4, 6] indicates that attribute information items with m = 2, m = 4, and m = 6 in attribute information A2 correspond to the three vertexes, respectively. It should be noted that, although the example here illustrates three-vertex faces, the number of vertexes forming each face is not limited to three and may be any integer not smaller than three. For example, quadrangular faces involve four vertexes, and polygonal faces involve vertexes as many as the vertexes of the polygon.

Furthermore, attribute information A2 may be specified in a file separate from the mesh data file, and may include pointer information pointing to that file. For example, the attribute information may be stored in a two-dimensional attribute map file, and attribute information A2 in the mesh data file may indicate the name of the attribute map file and two-dimensional coordinates in the attribute map. Thus, attribute information A2 may be included in the mesh data file or may be specified in a file separate from the mesh data file. In either way, the attribute information of three-dimensional points can be specified.

Next, the three-dimensional model will be described. FIG. 6 is a diagram for describing a three-dimensional model.

A three-dimensional model is a model generated based on two-dimensional data or three-dimensional data.

Three-dimensional model learner 1031 generates a three-dimensional model. The three-dimensional model is, for example, a network model generated by learning two-dimensional data (two-dimensional images) or three-dimensional data (a point cloud or a mesh) and then using a technique such as neural network to learn a three-dimensional shape and attribute information corresponding to the three-dimensional shape.

Three-dimensional model learner 1031 may generate the three-dimensional model through learning with neural radiance fields (NeRF) based on two-dimensional images. Three-dimensional model learner 1031 may generate the three-dimensional model after performing photogrammetry on two-dimensional images to convert the two-dimensional images into three-dimensional data. The three-dimensional model may also be generated using three-dimensional data obtained by a sensor (distance sensor).

Three-dimensional model data, which constitutes the three-dimensional model, includes information indicating a network model structure, feature values, and other information. For example, the three-dimensional model data includes information on neural network components. The information on the components includes, for example, layers such as the input layer, intermediate layers, and the output layer, nodes in each layer, weighting factors for the nodes, and transformation functions for the nodes.

Three-dimensional model encoder 1032 may encode the three-dimensional model data and transmit the encoded three-dimensional model data.

Three-dimensional model decoder 1033 receives the transmitted encoded three-dimensional model data and decodes the encoded three-dimensional model data into the three-dimensional model.

Rendering reconstructor 1034 reconstructs (generates) two-dimensional data (a two-dimensional image) or three-dimensional data (a point cloud or a mesh) based on the decoded three-dimensional model. For example, for a NeRF-modeled three-dimensional model, rendering reconstructor 1034 obtains viewpoint position or line-of-sight vector information, generates rendered two-dimensional data (a two-dimensional image) based on the three-dimensional model and on the viewpoint position or the line-of-sight vector, and outputs the two-dimensional data. The generated two-dimensional data represents a two-dimensional image of a three-dimensional object viewed from the viewpoint position or viewed along the line of sight indicated by the line-of-sight vector. The three-dimensional object corresponds to the subject captured as the two- or three-dimensional data input to three-dimensional model learner 1031.

Next, types of three-dimensional data will be described. FIG. 7 is a diagram illustrating types of three-dimensional data. As illustrated in FIG. 7, three-dimensional data includes a static object and a dynamic object.

The static object is three-dimensional data at an arbitrary time (a time point). The dynamic object is three-dimensional data that varies with time. In the following, point cloud data associated with a time point will be referred to as a PCC frame or a frame. Furthermore, mesh data at an arbitrary time is referred to as a mesh frame or a frame.

The object may be a three-dimensional data whose range is limited to some extent, such as ordinary video data, or may be three-dimensional data whose range is not limited, such as map information.

There are points that have varying densities. There may be sparse point cloud data (sparse mesh data) and dense point cloud data (dense mesh data).

Hereinafter, each processing unit will be described in detail. Sensor information is obtained by various means, including a distance sensor such as LiDAR or a range finder, a stereo camera, or a combination of a plurality of monocular cameras. Three-dimensional data generator 1018 generates three-dimensional data based on the sensor information obtained by sensor information obtainer 1017. Three-dimensional data generator 1018 generates position information (geometry information) as point cloud data, and adds attribute information associated with the geometry information to the geometry information.

When generating geometry information or adding attribute information, three-dimensional data generator 1018 may process the point cloud data. For example, three-dimensional data generator 1018 may reduce the data amount by omitting a point cloud whose position coincides with the position of another point cloud. Three-dimensional data generator 1018 may also convert the geometry information (such as shifting, rotating, or normalizing the position) or may generate mesh data by processing the point cloud data. Furthermore, three-dimensional data generator 1018 may render the attribute information.

Note that, although FIG. 1 illustrates three-dimensional data generation system 1011 as being included in three-dimensional data encoding system 1001, three-dimensional data generation system 1011 may be independently provided outside three-dimensional data encoding system 1001.

Encoder 1013 generates encoded data by encoding three-dimensional data according to an encoding method previously defined. Encoding method includes G-PCC (an encoding method using geometry information), V-PCC (an encoding method using a video codec), Draco (a mesh encoding method), and V-DMC (a mesh encoding method). The encoding method is not limited to these methods, and may be a method for encoding a dynamic mesh or another method obtained by combining these methods, for example.

Decoder 1024 decodes the encoded data into the three-dimensional data using the encoding method previously defined.

Multiplexer 1014 generates multiplexed data by multiplexing the encoded data in an existing multiplexing method. The generated multiplexed data is transmitted or accumulated. Multiplexer 1014 multiplexes not only the encoded data of three-dimensional data but also another medium, such as a video, an audio, subtitles, an application, or a file, or reference time information. Multiplexer 1014 may further multiplex attribute information associated with sensor information or point cloud data.

Multiplexing schemes or file formats include ISOBMFF, MPEG-DASH, which is a transmission scheme based on ISOBMFF, MMT, MPEG-2 TS Systems, or RTP, for example.

Demultiplexer 1023 extracts encoded data of three-dimensional data, other media, time information and the like from the multiplexed data.

Input/output unit 1015 transmits the multiplexed data in a method suitable for the transmission medium or accumulation medium, such as broadcasting or communication. Input/output unit 1015 may communicate with another device over the Internet or communicate with an accumulator, such as a cloud server.

As a communication protocol, http, ftp, TCP, UDP or the like is used. The pull communication scheme or the push communication scheme can be used.

A wired transmission or a wireless transmission can be used. For the wired transmission, Ethernet (registered trademark), USB, RS-232C, HDMI (registered trademark), or a coaxial cable is used, for example. For the wireless transmission, wireless LAN, Wi-Fi (registered trademark), Bluetooth (registered trademark), or a millimeter wave is used, for example.

As a broadcasting scheme, DVB-T2, DVB-S2, DVB-C2, ATSC3.0, or ISDB-S3 is used, for example.

Next, processing for dividing (classifying) three-dimensional data into one or more three-dimensional data items will be described. FIG. 8 is a diagram for describing encoding processing of three-dimensional data. FIG. 9 is a diagram for describing decoding processing of three-dimensional data.

As shown in FIG. 8, data divider 1041 divides three-dimensional data according to one or more three-dimensional spaces to generate one or more three-dimensional data items resulting from dividing (i.e., one or more divided three-dimensional data items). Encoder 1042 may encode the one or more divided three-dimensional data items to generate encoded data. Data divider 1041 and encoder 1042 may be included in a single encoding device as components of the encoding device, or may be included in separate devices.

Each of the one or more three-dimensional spaces may be referred to as a tile or a space. A three-dimensional space is, for example, a bounding box. Furthermore, the divided three-dimensional data in each three-dimensional space may be referred to as a slice. A slice, which is a divided three-dimensional data item, includes a point cloud, a mesh, or a three-dimensional model, having geometry information (geometry) or attribute information (attribute). The slices are each encoded by encoder 1042 on an element basis and output as encoded data. The encoded data includes multiple encoded slices.

As shown in FIG. 9, in decoding processing, decoder 1051 decodes the encoded data into the one or more divided three-dimensional data items (one or more slices). Data merger 1052 merges the one or more divided three-dimensional data items to reconstruct (generate) the three-dimensional data. Decoder 1051 and data merger 1052 may be included in a single decoding device as components of the decoding device, or may be included in separate devices. The one or more divided three-dimensional data items decoded by decoder 1051 do not necessarily need to be merged. Decoder 1051 may decode a portion of the one or more divided three-dimensional data items based on a portion of the encoded data and output the decoded portion of the divided three-dimensional data items. In that case, the decoding device need not include data merger 1052.

FIG. 10 is a diagram two-dimensionally and schematically illustrating tiles and slices of three-dimensional data.

In encoding multiple slices, the encoding device may encode the slices using dependences between the slices or without using the dependences. If the slices are encoded without the use of the dependences, the encoding device can encode each slice independently, reducing the processing time by encoding multiple slices in parallel. Furthermore, if the slices are encoded without the use of the dependences, the decoding device can decode each slice independently, reducing the processing time by decoding multiple slices in parallel. In addition, the decoding device can reduce processing load through partial decoding, in which a portion of the slices are decoded.

If the slices are encoded using the dependences, the encoding device signals identifiers indicating the dependences and encodes the data in the order of dependence, starting from data depended on. If the slices are encoded using the dependences, the decoding device decodes the data in the order of dependence, starting from data depended on, based on the identifiers.

The three-dimensional data may be divided into any number of data items in any dividing method. The three-dimensional data may be divided by determining the shapes of objects and dividing the three-dimensional points on an object basis. Alternatively, the three-dimensional data may be divided based on the number of three-dimensional points allowed in each slice. That is, the upper limit may be set for the number of three-dimensional points per slice. Alternatively, the three-dimensional data may be divided by determining whether each three-dimensional point is included in any three-dimensional space (tile information) using map information or geometry information. Tile shapes may overlap.

Thus, dividing the three-dimensional data into divided three-dimensional data items as above allows adaptive encoding suitable for the content or objects, and allows parallel processing during decoding.

Now, the following describes a method of selecting three-dimensional data to be presented or transmitted from among multiple three-dimensional data items.

A server accumulates multiple three-dimensional data items for the same space. For example, the server accumulates point cloud data and mesh data for the same space. The server is an example of the encoding device. A terminal switches, based on the purpose intended on the terminal, three-dimensional data to be obtained from the server and presents the switched three-dimensional data. For example, the terminal may be capable of three-dimensional data analysis. In that case, the three-dimensional data to be presented on the terminal may be switched according to the purpose, such as analysis or viewing, based on a user operation. The terminal is an example of the decoding device.

Switching the three-dimensional data may involve switching between presenting a point cloud and presenting a mesh as the three-dimensional data. Similarly, switching the three-dimensional data may involve switching between transmitting a point cloud and transmitting a mesh as the three-dimensional data. For example, the terminal may transmit the result of a user's selection to the server, receive (download) three-dimensional data corresponding to the result of selection from the server, and present the received three-dimensional data. The three-dimensional data (a point cloud or a mesh) may be encoded or unencoded in the server. If the three-dimensional data is encoded, the terminal may receive the encoded three-dimensional data from the server, decode the received encoded three-dimensional data into three-dimensional data, and present the decoded three-dimensional data.

FIG. 11 is a diagram illustrating an example of a terminal presentation screen that is switchable according to a request of a user.

As shown in FIG. 11, terminal presentation screen 1061 may be switched according to a user request. The terminal presentation screen includes point cloud button 1061a and mesh button 1061b as user interfaces for receiving user requests. Point cloud button 1061a receives requests to present encoded point clouds (encoded point cloud data). Mesh button 1061b receives requests to present encoded meshes (encoded mesh data). Upon the user's input to point cloud button 1061a, the terminal receives a request to present an encoded point cloud and provides a notification of (transmits) the request to the server, indicating the result of selection of data to be presented. Upon the user's input to mesh button 1061b, the terminal receives a request to present an encoded mesh and provides a notification of (transmits) the request to the server, indicating the result of selection of data to be presented. It should be noted that "present" may also be expressed as "display."

In response to receiving the request indicating the result of selection, the server transmits three-dimensional data corresponding to the result of selection to the terminal. If the received request is a request to present an encoded point cloud, the server transmits the encoded point cloud to the terminal. If the received request is a request to present an encoded mesh, the server transmits the encoded mesh to the terminal.

Meshes have the characteristic of being suitable for presentation because they impose less processing load for presentation. In contrast, point clouds have the characteristic of being suitable for measurement because they provide accurate geometry information of three-dimensional models represented by three-dimensional point clouds. The user can select an appropriate type of three-dimensional data according to the user's need, such as, for example, a mesh for observing a three-dimensional model, or a point cloud for measuring a three-dimensional model. This allows reduced presentation processing or accurate measurement.

FIG. 12 is a diagram illustrating an example of terminal presentation screens that are automatically switchable according to an operation by the user.

The terminal performs processing of enlarging the three-dimensional data in response to receiving a user operation. At magnifications lower than a predetermined magnification, the terminal may present mesh data as illustrated on terminal presentation screen 1062; at magnifications higher than or equal to the predetermined magnification, the terminal may present point cloud data as illustrated on terminal presentation screen 1063. For example, the terminal may initially present mesh data at a magnification lower than a predetermined magnification. The user may then perform an operation of enlarging the presentation to the predetermined magnification. In response, the terminal may download, from the server, point cloud data corresponding to the portion of the three-dimensional data focused on (presented) due to the enlargement, and may decode the downloaded point cloud data for presentation.

The above illustrates an example in which the type of the three-dimensional data to be presented is switched in response to an operation of enlarging or reducing the three-dimensional data. However, the type of the three-dimensional data to be presented may be switched in response to other operations. For example, in response to receiving the user's tap operation on an area of mesh data being presented, the terminal may switch to presenting point cloud data corresponding to the area of the mesh data selected by the tap. The terminal may present the point cloud data superimposed on the mesh data, or may present the point cloud data alone instead of the mesh data (i.e., without presenting the mesh data). The terminal may predict in advance before presentation a portion that will be enlarged to the predetermined magnification, download point cloud data corresponding to the predicted portion, and decode and present the downloaded point cloud data. If the point cloud data and the mesh data have undergone spatial synchronization (coordinate alignment) in advance, the terminal may simply present the downloaded point cloud data without performing spatial synchronization. If the point cloud data and the mesh data have not undergone spatial synchronization, the terminal may present the point cloud data after positionally aligning the point cloud data with the mesh data (or with the coordinate system of the mesh data) based on synchronization information for spatial synchronization. It should be noted that the terminal may present the point cloud data without performing position alignment. It should also be noted that, although the above illustrates an example of spatially synchronizing point cloud data with mesh data, the terminal may spatially synchronize mesh data with point cloud data and present the mesh data.

Thus, the terminal downloads only necessary point cloud data and decodes and presents the downloaded point cloud data. This will reduce data traffic between the server and the terminal, processing load on the terminal, and presentation delay.

Generally, mesh data has a smaller data size whereas point cloud data has a larger data size. That is, for mesh data and point cloud data of the same three-dimensional object, the mesh data is smaller in data size than the point cloud data. The terminal can therefore reduce the initial presentation delay by downloading and presenting mesh data first.

Furthermore, presenting mesh data allows the terminal to reduce the processing load for observation of the three-dimensional model. In addition, simultaneously presenting mesh data and point cloud data allows the terminal to improve visibility to facilitate measurement.

It should be noted that the three-dimensional data to be presented may be switched based on the communication network bandwidth. The terminal may present mesh data when the network speed is lower than a predetermined speed due to a narrow bandwidth, and may present point cloud data when the network speed is higher than or equal to the predetermined speed.

Furthermore, the three-dimensional data to be presented may be switched according to the capabilities of the terminal. For example, the three-dimensional data to be presented may be switched based on the processing performance of the terminal or the CPU usage rate of the terminal. The terminal presenting point cloud data may switch to presenting mesh data if the point cloud data presentation is no longer possible due to insufficient processing performance or CPU resources of the terminal. The terminal presenting mesh data may switch to presenting point cloud data if sufficient processing performance or CPU resources of the terminal are determined to be available still after the mesh data presentation.

Now, other examples of switching the three-dimensional data will be described.

In presenting three-dimensional data used at a construction site, the terminal may switch the type of the three-dimensional data in the following manner. The terminal may present mesh data to show appearance, such as a building exterior or a map, and present point cloud data to show an area that includes a part requiring measurement, such as a distortion, crack, or warp on a building.

In presenting three-dimensional data in space such as a stadium, hall, or factory, the terminal may switch the type of the three-dimensional data in the following manner. The terminal may present mesh data to show appearance, such as the brightness, color tone, or atmosphere of lighting, and present point cloud data to allow the user to measure the studio geometry, the arrangement of equipment, or the layout of passages.

Furthermore, the three-dimensional data to be presented may be switched among different resolutions.

The terminal may render a three-dimensional model and present it by switching among point cloud data items with different resolutions, mesh data items with different resolutions, and the three-dimensional model. For example, the terminal may present low-resolution mesh data to show three-dimensional data viewed from a distant viewpoint, and switch to presenting high-resolution mesh data when the viewpoint becomes closer. This can improve the precision of three-dimensional data display.

In analyzing an athlete's movements in a sport, the terminal may present mesh data until a specific movement or site is identified. Upon identification of the specific movement or site, the terminal may switch to presenting point cloud data of the corresponding area, which may then be used for three-dimensional shape measurement.

The terminal may switch the presentation of a three-dimensional model among different resolutions in cases such as a video game. For example, the terminal may use high-resolution three-dimensional data to present three-dimensional data of important parts, and use low-resolution three-dimensional data to present three-dimensional data of non-important parts. This can improve the overall processing performance. It should be noted that whether a three-dimensional model is important is determined based on, for example, whether the model is related to operations in the video game (e.g., players, targets, and guns are important in a shooting game) or whether the model is related to the player's selection (e.g., merchandise information is important in a shopping scene). It should also be noted that the importance of each three-dimensional model may be preset for each video game.

In presenting topographic data as a three-dimensional model, the terminal may switch among topographic data items with different resolutions. This allows more detailed topographic information to be displayed as needed.

In a further example, the terminal may display thumbnails on the Web by presenting low-resolution three-dimensional data. Upon selection of a thumbnail, an application may use corresponding high-resolution three-dimensional data for measurement or viewing. It should be noted that, if three-dimensional data is displayed on, for example, a device capable of two-dimensional display, the data is presented as two-dimensional data representing a three-dimensional object (a subject) viewed from a specific viewpoint along a specific direction. In other words, three-dimensional data may include camera information indicating a specific viewpoint and a specific direction, and two-dimensional data representing a three-dimensional object viewed from the specific viewpoint along the specific direction.

The terminal may initially prioritize displaying over measurement and present lightweight mesh data, and when measurement is required, replace the mesh data with point cloud data suitable for measurement. This allows implementation of a lightweight application.

Next, the configuration of server 1070 and terminal 1090 will be described. FIG. 13 is a block diagram illustrating an example of the functional configuration of a server and a terminal.

Server 1070 includes data generator 1071, synchronizer 1075, point cloud encoder 1076, mesh encoder 1077, model encoder 1078, multiplexer 1079, and data extractor 1080.

Data generator 1071 generates three-dimensional data based on at least one of two-dimensional data or three-dimensional data. The three-dimensional data generated includes at least two of point cloud data, mesh data, or three-dimensional model data. Data generator 1071 includes point cloud generator 1072, mesh generator 1073, and model generator 1074. It is sufficient that data generator 1071 includes at least two of point cloud generator 1072, mesh generator 1073, or model generator 1074. Point cloud generator 1072 generates point cloud data based on at least one of two-dimensional data or three-dimensional data. Mesh generator 1073 generates mesh data based on at least one of two-dimensional data or three-dimensional data. Model generator 1074 generates three-dimensional model data by machine learning based on at least one of two-dimensional data or three-dimensional data.

The two-dimensional data input to data generator 1071 may be two-dimensional images obtained by a camera. The three-dimensional data input to data generator 1071 may be point cloud data obtained by, for example, a sensor, such as a LiDAR sensor, in space such as a construction site, a factory, or an office. For each point in the point cloud data of the three-dimensional data, data generator 1071 may generate attribute information, including color information corresponding to the point, using the two-dimensional images of the two-dimensional data. The three-dimensional data generated by data generator 1071 may be divided into data items corresponding to certain spaces. The point cloud data, the mesh data, and the three-dimensional model data may each be divided into data items corresponding to certain spaces.

Synchronizer 1075 synchronizes the spatial positions or the times (such as the playback times, decoding times, and obtainment times) of the point cloud data, the mesh data, and the three-dimensional model data generated by data generator 1071. The times of each data may include the playback time, decoding time, and obtainment time. It should be noted that, instead of synchronizing the point cloud data, the mesh data, and the three-dimensional model data, synchronizer 1075 may generate synchronization information for synchronizing these data items. It should also be noted that synchronizer 1075 may perform processing of synchronizing or generating synchronization information (a synchronization signal) for at least two types of three-dimensional data, i.e., at least two of the point cloud data, the mesh data, and the three-dimensional model data, generated by data generator 1071. Synchronizer 1075 thus does not necessarily need to perform the processing for synchronization (synchronization processing) for all the three types of three-dimensional data.

Point cloud encoder 1076 encodes the point cloud data subjected to the synchronization processing by synchronizer 1075. It should be noted that point cloud encoder 1076 does not necessarily need to encode the point cloud data. The point cloud data may be encoded in advance or may be encoded upon request from terminal 1090.

Mesh encoder 1077 encodes the mesh data subjected to the synchronization processing by synchronizer 1075.

Model encoder 1078 encodes the three-dimensional model data subjected to the synchronization processing by synchronizer 1075.

Multiplexer 1079 multiplexes the encoded point cloud data (an encoded point cloud), the encoded mesh data (an encoded mesh), the encoded three-dimensional model data, and the synchronization information, using a predetermined format or a predetermined multiplexing method. It should be noted that the multiplexing by multiplexer 1079 does not necessarily need to be performed. If the multiplexing is not performed, server 1070 need not include multiplexer 1079.

Data extractor 1080 extracts a portion of the multiplexed three-dimensional data corresponding to a request from terminal 1090 and transmits the extracted portion of the three-dimensional data to terminal 1090. It should be noted that the data extraction by data extractor 1080 does not necessarily need to be performed. If the data extraction is not performed, server 1070 need not include data extractor 1080. If the data extraction by data extractor 1080 is not performed, server 1070 may transmit the three-dimensional data multiplexed by multiplexer 1079 to terminal 1090. Furthermore, if the multiplexing by multiplexer 1079 is also not performed, server 1070 may transmit the encoded point cloud data (encoded point cloud), the encoded mesh data (encoded mesh), the encoded three-dimensional model data (encoded three-dimensional model), and the synchronization information to terminal 1090, or may transmit a bitstream that includes the encoded point cloud data (encoded point cloud), the encoded mesh data (encoded mesh), the encoded three-dimensional model data (encoded three-dimensional model), and the synchronization information to terminal 1090.

Terminal 1090 includes controller 1091, decoder 1092, and presenter 1093.

Controller 1091 transmits, to server 1070, a request for a portion of the three-dimensional data to be presented. Controller 1091 may identify the portion of the three-dimensional data based on a user operation received.

Decoder 1092 decodes the portion of the three-dimensional data based on a bitstream (encoded data) obtained from server 1070.

Presenter 1093 renders and presents the decoded portion of the three-dimensional data.

Data generator 1071 in FIG. 13 may be implemented by data generator 1110 illustrated in FIG. 14. FIG. 14 is a block diagram illustrating another example of a data generator of a server.

Data generator 1110 includes point cloud generator 1111, mesh generator 1112, and model generator 1113.

Point cloud generator 1111 has the same functions as point cloud generator 1072. Point cloud generator 1111 obtains point cloud data obtained by point cloud sensor 1101 and two-dimensional images obtained by camera 1102, and generates point cloud data based on the obtained point cloud data and two-dimensional images. The point cloud data generated by point cloud generator 1111 includes geometry information of each point, as well as attribute information (such as color information) extracted from the two-dimensional images and corresponding to each point indicated by the geometry information.

Mesh generator 1112 generates mesh data based on the point cloud data generated by point cloud generator 1111.

Model generator 1113 has the same functions as model generator 1074. Model generator 1113 obtains point cloud data obtained by point cloud sensor 1101 and two-dimensional images obtained by camera 1102, and generates three-dimensional model data through machine learning based on the point cloud data and the two-dimensional images.

Point cloud data, mesh data, and three-dimensional model data may each be data that is independently generated as described in FIG. 13. Mesh data may be generated from point cloud data as described in FIG. 14. It should be noted that point cloud data may be generated from mesh data.

A mesh may be generated from a point cloud; a point cloud may be generated from a mesh.

It should be noted that point cloud data, mesh data, and three-dimensional model data may be generated by server 1070, or may be generated by a sensor or by terminal 1090 equipped with a sensor. The sensor is, for example, point cloud sensor 1101 and camera 1102.

Next, processing for synchronizing coordinate systems of a plurality of three-dimensional data will be described. FIG. 15 and FIG. 16 are diagrams for describing synchronization processing of coordinate systems.

Different three-dimensional data items corresponding to the same space may have different origin positions (origin coordinates) deviating from the actual origin coordinates. This is due to differences between their underlying systems or the local coordinate systems used by the systems.

For example, if mesh data is generated from point cloud data, the mesh data and the point cloud data have the same origin position. However, if mesh data and point cloud data are generated by different systems, the mesh data and the point cloud data may have different origin positions.

In the examples shown in FIGS. 15 and 16, the origin coordinates in the coordinate system of mesh data and the origin coordinates in the coordinate system of point cloud data are, for example, both (x1, y1, z1) in world coordinates. The mesh data and the point cloud data are thus in the same coordinate system. It should be noted that, if these origin coordinate sets are different, they may be corrected to be the same.

Now, synchronization of divided three-dimensional space information will be described.

FIG. 15 shows a case where three-dimensional spatial regions for dividing mesh data are the same as three-dimensional spatial regions for dividing point cloud data. Specifically, the three-dimensional spatial regions in the mesh data coordinate system and the three-dimensional spatial regions in the point cloud coordinate system are the same in number, size, and position.

With reference to the three-dimensional spatial regions indicated by thick dashed lines, the bounding boxes representing the three-dimensional spaces have their origins at the same position (marked by black triangles) and their maximum value points at the same position (marked by black squares) in the mesh data coordinate system and the point cloud data coordinate system.

Here, the height, width, and depth sizes of the bounding boxes are also the same in the mesh data coordinate system and the point cloud data coordinate system.

It should be noted that, as shown in FIG. 16, the three-dimensional spatial regions in the mesh data coordinate system and the three-dimensional spatial regions in the point cloud coordinate system do not necessarily need to be completely the same in number, size, and position. The three-dimensional spatial regions in the mesh data coordinate system may be larger divided regions, whereas the three-dimensional spatial regions in the point cloud data coordinate system may be subdivisions of the three-dimensional spatial regions in the mesh data coordinate system. In this example, a unit of multiple three-dimensional spatial regions in the point cloud data coordinate system corresponds to a single three-dimensional spatial region in the mesh data coordinate system.

Next, the relationship between the three-dimensional space and the encoded data will be described. FIG. 17 is a diagram for describing the relationship between a three-dimensional space and encoded data.

As described above, three-dimensional data includes, for example, any of point cloud data, mesh data, and a three-dimensional model.

As shown in FIG. 17, three-dimensional data may be divided into three three-dimensional data items for three three-dimensional spaces (tiles or spaces). The encoding device encodes each of the three three-dimensional data items resulting from dividing, and transforms the encoded data into a data unit by adding a header. The header signals (includes) the identifier (Space_ID) of the space to which the encoded data of the data unit belongs, and the identifier (DataUnit_ID) of the data unit.

The data unit is further transformed into an encoding scheme unit by adding a header that includes the identifier of the data unit or information on the data unit length.

Next, syntax of an encoding scheme unit will be described. FIG. 18 is a diagram illustrating an example of syntax of an encoding scheme unit. FIG. 19 is a diagram illustrating an example of syntax of an encoded point cloud. FIG. 20 is a diagram illustrating an example of syntax of an encoded mesh. FIG. 21 is a diagram illustrating an example of syntax of an encoded three-dimensional model.

"unit_type" indicates the type of the data unit stored in the encoding scheme unit. This specifies the type of the data unit stored in the encoding scheme unit.

"length" indicates the length of the data unit.

"data()" indicates the body of the data unit.

In FIG. 19, "unit_type" of 0 indicates that the data unit is geometry information (geometry) of the encoded point cloud. "unit_type" of 1 indicates that the data unit is attribute information of the encoded point cloud. "unit_type" of 2 indicates that the data unit is metadata of the encoded point cloud.

In FIG. 20, "unit_type" of 0 indicates that the data unit is geometry information (geometry) of the encoded mesh. "unit_type" of 1 indicates that the data unit is attribute information of the encoded mesh. "unit_type" of 2 indicates that the data unit is metadata of the encoded mesh.

In FIG. 21, "unit_type" of 0 indicates that the data unit is element 1 of the encoded three-dimensional model. "unit_type" of 1 indicates that the data unit is element 2 of the encoded three-dimensional model. "unit_type" of 2 indicates that the data unit is metadata of the encoded three-dimensional model.

It should be noted that the syntax is not limited to the exemplary syntax configurations described above and shown in FIGS. 19 to 21. The syntax may use only some of the syntax elements, may include types (categories) not described above, or may have syntax elements reordered. For example, the syntax of an encoding scheme unit may have a structure common to multiple encoding schemes as in FIG. 18 and also indicate unit_type, length, and data() shown in FIGS. 19 to 21.

It should be noted that an encoding scheme unit may be provided with a further header indicating the type of the encoding scheme unit. Exemplary encoding scheme unit types include "point_cloud_codec_unit" indicating point cloud data, "mesh_codec_unit" indicating mesh data, and "model_codec_unit" indicating three-dimensional model data. This allows integrated handling of multiple encoding schemes.

FIG. 22 is a diagram illustrating an example of syntax of three-dimensional data information.

Syntax for storing multiple encoding schemes in a single format may indicate the number of three-dimensional data items (number_of_3Dformat) included in the format and the types of the three-dimensional data items (format_type), and may store data of each format. This allows integrated handling of multiple encoding schemes or three-dimensional data items, as well as identification of multiple encoding schemes or three-dimensional data items.

"3Ddata_info" indicates information on the format structure that stores multiple three-dimensional data items.

"number_of_3Dformat" indicates the number of three-dimensional formats used.

"format_type" indicates the types of the formats of the stored three-dimensional data. For example, the values of "format_type" and the formats corresponding to the values may be defined as follows. "format_type" of 0 indicates that the format of the stored three-dimensional data is point cloud data (point cloud). "format_type" of 1 indicates that the format of the stored three-dimensional data is mesh data (mesh). "format_type" of 2 indicates that the format of the stored three-dimensional data is G-PCC data (g-pcc). "format_type" of 3 indicates that the format of the stored three-dimensional data is V-DMC data (v-dmc). "format_type" of 4 indicates that the format of the stored three-dimensional data is three-dimensional model data (3Dmodel).

Next, the data structure of encoded data of a plurality of three-dimensional data will be described for each type of three-dimensional data. FIG. 23 is a diagram for describing the data structure of an encoded point cloud. FIG. 24 is a diagram for describing the data structure of an encoded mesh. FIG. 25 is a diagram for describing the data structure of an encoded three-dimensional model.

The encoding device divides each type of three-dimensional data into three-dimensional data items for the respective spatial regions, and encodes each of the three-dimensional data items resulting from dividing (i.e., divided three-dimensional data items) to generate an encoded data item.

Each encoded data item is provided with a header that stores at least one of "data_unit_id" and "space_id."

Here, "data_unit_id" is an identifier identifying the data unit within the encoded data and is unique within the encoded data. Furthermore, "space_id" indicates identification information of the spatial region. If "data_unit_id" or "space_id" is common among multiple types of three-dimensional data, the same values are indicated for the multiple types of three-dimensional data.

In the examples shown in FIGS. 23 to 25, space_id = 1 is assigned to all of the following data units: the data unit with data_unit_id = 0 in the encoded point cloud, the data unit with data_unit_id = 3 in the encoded mesh, and the data unit with data_unit_id = 0 in the encoded three-dimensional model. This means that these three-dimensional data units belong to the same three-dimensional space indicated by Space_ID #1.

The data, such as data and a header, may be included in a bitstream structure such as a data unit or an encoding scheme unit, or may be stored in a predetermined file format such as some type of box in ISOBMFF.

Next, three-dimensional space information will be described. FIG. 26 is a diagram two-dimensionally illustrating an example of a plurality of three-dimensional spaces. FIG. 27 is a diagram illustrating an example of a bounding box. FIG. 28 is a diagram illustrating an example of syntax of three-dimensional space information.

In the syntax of the three-dimensional spatial information, "3Dspace_info" is information indicating divided three-dimensional spaces. "3Dspace_info" can be used for partial decoding.

"number_of_space" indicates the number of divided three-dimensional spaces.

"space_id" indicates the identifier of each divided three-dimensional space.

The three-dimensional spatial information includes bounding box information, which is information for defining each bounding box as illustrated in FIG. 27.

The bounding box information includes "bounding_box_xyz" and "bounding_box_whd."

"bounding_box_xyz" indicates the coordinates of the reference point of the bounding box. In the example in FIG. 27, the coordinates are represented by the x, y, and z coordinate values (x0, y0, z0), for example.

"bounding_box_whd" indicates the size of the bounding box. In the example in FIG. 27, the size is represented by the width w, height h, and depth d (w0, h0, d0), for example.

In addition, the three-dimensional spatial information may include the identifiers of the data units of the respective encoded data types. It should be noted that the three-dimensional spatial information does not necessarily need to include these identifiers. That is, these identifiers do not necessarily need to be signaled.

"pointcloud_id" indicates the identifier of the data unit of the encoded point cloud for the space corresponding to "space_id."

"mesh_id" indicates the identifier of the data unit of the encoded mesh for the space corresponding to "space_id."

"model_id" indicates the identifier of the data unit of the encoded three-dimensional model for the space corresponding to "space_id."

It should be noted that the data units may have "data_unit_id" indicated but no "space_id" indicated. In that case, information on each space in the three-dimensional spatial information may store the identifiers of the data units of the respective encoded data types. In this manner, the three-dimensional spatial information may be associated with the divided three-dimensional encoded data items.

Furthermore, if the data units have "space_id" indicated, "space_id" may associate the three-dimensional spatial information with the identifiers of the data units of the respective encoded data types. In that case, the identifiers of the data units of the respective encoded data types need not be stored.

The three-dimensional spatial information may be standardized so that point cloud data and mesh data comply with a standard dividing method, a standard origin of each divided space, and a standard bounding box size. Alternatively, the three-dimensional spatial information may be set identically for both point cloud data and mesh data. Thus, the three-dimensional spatial information may be standardized or identical between different types of three-dimensional data. Standardizing the three-dimensional spatial information facilitates switching (e.g., switching the presentation or transmission) to a different type of three-dimensional data. In addition, in a format capable of integrated handling of multiple types of three-dimensional data, this eliminates the need to provide three-dimensional spatial information for each type of three-dimensional data. Rather, the same three-dimensional spatial information can be used for all the types of three-dimensional data, reducing the data amount of the three-dimensional spatial information.

It should be noted that, in addition to the three-dimensional spatial information of point cloud data and mesh data, the three-dimensional spatial information of a three-dimensional model may similarly be synchronized or standardized with the three-dimensional spatial information of other types of three-dimensional data.

Next, the relationship between the data structure of three-dimensional data and partial decoding will be described. FIG. 29 is a flowchart illustrating an example of partial decoding. FIG. 30 is a diagram illustrating an example of a three-dimensional spatial region that is to be the target of partial decoding. FIG. 31 is a diagram illustrating an example of the data structure of an encoded point cloud that is to undergo partial decoding. FIG. 32 is a diagram illustrating an example of the data structure of an encoded mesh that is to undergo partial decoding. FIG. 33 is a diagram illustrating an example of the data structure of an encoded three-dimensional model that is to undergo partial decoding.

In partial decoding, first, the decoding device determines a three-dimensional spatial region that is to be the target of partial decoding (S1001).

Next, the decoding device refers to three-dimensional spatial information (3Dspace_info) to identify a region that overlaps the target three-dimensional spatial region from bounding box information of three-dimensional spatial regions, and obtains space_id of the identified region (S1002).

Next, the decoding device obtains, from encoded data, data units having space_id obtained, and decodes the data units (S1003). Thus, the decoding device performs partial decoding for decoding a portion of three-dimensional data. In partial decoding, the decoding device decodes only a portion of three-dimensional data rather than the entire three-dimensional data.

For example, as shown in FIG. 30, the target three-dimensional spatial region for partial decoding may be the region indicated by thick lines. Then, space_id of the three-dimensional space to be obtained is determined to be #2 from the three-dimensional space information.

Then, as shown in FIGS. 31 to 33, data units corresponding to Space_id = #2 in the encoded data of multiple types of three-dimensional data are obtained and decoded.

It should be noted that, instead of space_id, the decoding device may obtain data unit IDs from the three-dimensional spatial information, and obtain data units having the obtained data unit IDs to perform partial decoding.

Next, a case where there is no spatial synchronization will be described. FIG. 34 is a diagram illustrating an example of coordinate systems of different types of three-dimensional data that are not spatially synchronized. FIG. 35 is a diagram illustrating an example of syntax of three-dimensional data information. FIG. 36 is a diagram illustrating an example of syntax of three-dimensional space information.

As shown in FIG. 34, data items for the same space may have different origin coordinates due to different coordinate systems. The encoding device may align the origin coordinates by calculating the relative values between the coordinates (x1-x2, y1-y2, z1-z2) and correcting the coordinates. The encoding device may provide the notification of (transmit) the calculated relative values between the coordinates to the decoding device (terminal) as synchronization information.

The synchronization information may be represented as the relative position (of the origin) of point cloud data to the position (of the origin) of mesh data, or as the relative position of mesh data to the position of point cloud data.

The above also applies to three-dimensional model data. Thus, the synchronization information may be represented as the relative position (of the origin) of one type of three-dimensional data to the position (of the origin) of another type of three-dimensional data. It should be noted that, for three or more types of three-dimensional data, their relative positions are calculated with reference to the position of any one type of three-dimensional data.

Three-dimensional data information may include "space_sync_information" indicating synchronization information as shown in FIG. 35. "space_sync_information" indicates three-dimensional space synchronization information, indicating, for example, the amount of three-dimensional space misalignment (the differences, i.e., the relative values, between the reference coordinates and the current coordinates).

The three-dimensional data information may store synchronization information (space_sync_information) for each of multiple format information items. In that case, a data format serving as the synchronization reference may be located at the beginning of a loop, and the second and subsequent iterations of the loop may store synchronization information (relative position information) relative to the format located at the beginning.

Alternatively, the three-dimensional spatial information may include "space_sync_information" indicating synchronization information as shown in FIG. 36. For three-dimensional spaces at differently misaligned spatial positions, loop iterations for the respective three-dimensional spaces may store synchronization information.

FIG. 37 is a diagram illustrating an example of the functional configuration of the terminal.

Terminal 1120 includes decoder 1121 and synchronizing presenter 1122.

Decoder 1121 decodes synchronization information, based on three-dimensional data information or three-dimensional space information. Synchronizing presenter 1122 performs position alignment of three-dimensional data based on the synchronization information, and presents the three-dimensional data after position alignment.

Next, spatial synchronization will be described. FIG. 38 is a flowchart illustrating an example of spatial synchronization processing.

First, a system that includes the encoding device (server) and the decoding device (terminal) determines whether spatial synchronization is necessary between point cloud data and mesh data (S1011).

If the system determines that spatial synchronization is necessary (S1011: Yes), the system performs step S1012. If the system determines that spatial synchronization is unnecessary (S1011: No), the system performs step S1013.

At step S1012, the system determines whether the point cloud data and the mesh data are spatially synchronized (S1012).

If the system determines that the data items are spatially synchronized (S1012: Yes), the system performs step S1014. If the system determines that the data items are not spatially synchronized (S1012: No), the system performs step S1015.

At step S1013, the system presents the point cloud data and the mesh data without performing spatial synchronization (S1013).

At step S1014, the system presents the point cloud data and the mesh data after performing spatial synchronization based on synchronization information (S1014).

At step S1015, the system simply presents the point cloud data and the mesh data (S1015).

It should be noted that the processing at steps S1011 to S1012 may be performed by the encoding device or the decoding device. The processing at steps S1013 to S1015 may be performed by the decoding device.

It should be noted that, although the above flowchart illustrates spatial synchronization processing between point cloud data and mesh data, the processing may also apply to three-dimensional model data. Spatial synchronization processing may be performed between any different types of three-dimensional data without limitation on data types.

Whether spatial synchronization is necessary may depend on an application or use. For example, if the three-dimensional data is to be used for measurement, which requires accurate positions, spatial synchronization may be determined to be necessary.

Alternatively, if the three-dimensional data is to be displayed for providing an overview to the user, spatial synchronization may be determined to be unnecessary because such presentation is not expected to require accurate position alignment.

It should be noted that the level of position alignment may be specified. In that case, the system (the encoding device or the decoding device) may adjust the accuracy of synchronization based on the level of position alignment.

### (Others)

The above embodiment has described an example of spatial synchronization of multiple three-dimensional data items. In addition to that, time synchronization may be performed to synchronize the presentation times, decoding times, or acquisition times. At least one of spatial synchronization and time synchronization may be performed.

Furthermore, for seamless switching of color representation presented upon switching of the three-dimensional data, parameters such as color matrix, color bit depth, and HDR may be set identically for different three-dimensional data items. Thus, attribute information of multiple three-dimensional data items may be synchronized.

The above embodiment has described an example of switching between different types of three-dimensional data, such as point cloud data and mesh data. However, the three-dimensional data items for switching are not limited to different types of three-dimensional data. For example, the three-dimensional data items may be three-dimensional data items with different resolutions, point cloud data items with different numbers of points, or mesh data items with different numbers of points or faces. Furthermore, the three-dimensional data may be switched among three or more three-dimensional data items.

Furthermore, the three-dimensional data may be switched among point cloud data items with different obtainment times. For example, at a construction site, the three-dimensional data items for switching may include point cloud data before construction, point cloud data after construction, point cloud data 10 years later, and modeled mesh data.

In addition to three-dimensional data, three-dimensional model data such as NeRF data may be used. Three-dimensional model data is a model for presenting three-dimensional data, and may be encoded or unencoded. The data may be switched among three-dimensional model data items for the same space, or among distinct three-dimensional model data items. In these cases, the above-described spatial synchronization method may be used. Furthermore, the identifiers of three-dimensional model data items may be added to a data format capable of integrated handling of point cloud data and mesh data. This allows integrated handling of three-dimensional data and three-dimensional model data. Furthermore, spatial information (such as the origin, bounding box, and dividing method) may be set identically for three-dimensional data and three-dimensional model data. This can standardize information on three-dimensional spatial regions to facilitate partial decoding.

Furthermore, the three-dimensional data to be processed (the three-dimensional data to be presented or transmitted) may be switched in the following order: mesh data with a resolution lower than a first resolution, mesh data with a resolution higher than or equal to the first resolution, point cloud data with a resolution lower than a second resolution, and point cloud data with a resolution higher than or equal to the second resolution.

Furthermore, regarding the timing of data transmission or encoding, the server may accumulate data for three-dimensional models encoded in advance and, in response to a request from the terminal, extract three-dimensional data corresponding to the request. The server may also encode, upon receiving a request from the terminal, three-dimensional data corresponding to the request. The terminal may request and download three-dimensional data to be processed from the server in advance. This can reduce the time required for presentation by the terminal.

Furthermore, it may be possible to select, for each divided three-dimensional data item, whether to present point cloud data, mesh data, or three-dimensional model data, or to present two or more of these types of three-dimensional data superimposed. For example, the terminal may present a mesh for a divided data item corresponding to an avatar's trunk, and present a point cloud for a divided data item corresponding to the avatar's face. This allows more precise presentation.

The above embodiment has illustrated point cloud data, mesh data, and three-dimensional model data as three-dimensional data representing a three-dimensional object. However, the three-dimensional data is not limited to such data. For example, the three-dimensional object may be represented by multiple sets, each including: line of sight information indicating a line of sight; and a two-dimensional image of the three-dimensional object viewed from the line of sight. That is, data including such sets may be regarded as a type of three-dimensional data. Furthermore, three-dimensional data in other formats may be used, such as Gaussian splatting data.

FIG. 39 is a diagram illustrating an example of the configuration of a decoding device. FIG. 40 is a flowchart illustrating an example of a decoding method performed by the decoding device.

Decoding device 1130 includes circuitry 1131 and memory 1132 coupled to circuitry 1131.

Circuitry 1131 performs the processes described below.

Circuitry 1131 performs obtaining encoded data that includes (i) encoding scheme information (format) indicating one of encoding schemes that include first data representing a three-dimensional object and second data representing the three-dimensional object and (ii) identification information indicating a three-dimensional space including the three-dimensional object (S1021). Next, circuitry 1131 performs decoding, based on the encoded data, the first data and the second data that correspond to the three-dimensional space (S1022). Next, circuitry 1131 performs generating first presentation data for presentation, by rendering the first data (S1023). Next, circuitry 1131 performs generating second presentation data for presentation, by rendering the second data (S1024). Next, circuitry 1131 performs presenting including switching from a presentation of the second presentation data generated to a presentation of the first presentation data (S1025). It should be noted that the first presentation data and the second presentation data are two-dimensional data or three-dimensional data generated by rendering reconstructor 1034.

Accordingly, first presentation data and second presentation data are generated based on first data and second data that correspond to the three-dimensional space, and presenting including switching from a presentation of the second presentation data to a presentation of the first presentation data is performed, and thus, in the switching between two data representing the three-dimensional object, the switching and presenting can be performed without causing spatial deviation. Therefore, the first presentation data and the second presentation data can be appropriately presented.

For example, the first data is point cloud data representing the three-dimensional object.

For this reason, presenting including switching from the presentation of the second presentation data to the presentation of the first presentation data that is based on point cloud data is performed, and thus, in the switching between the two data representing the three-dimensional object, the two data can be switched and presented without causing spatial deviation.

For example, the second data is mesh data representing the three-dimensional object.

For this reason, presenting including switching from the presentation of the second presentation data that is based on the mesh data to the presentation of the first presentation data is performed, and thus, in the switching between the two data representing the three-dimensional object, the two data can be switched and presented without causing spatial deviation.

For example, the second data is three-dimensional model data representing the three-dimensional object. The three-dimensional model data indicates a machine learning model obtainable through machine learning of sets of (i) lines of sight and (ii) two-dimensional images.

For this reason, presenting including switching from the presentation of the second presentation data that is based on the three-dimensional model data to the presentation of the first presentation data is performed, and thus, in the switching between the two data representing the three-dimensional object, the two data can be switched and presented without causing spatial deviation.

For example, the second data is a two-dimensional image of the three-dimensional object when viewed from a predetermined line-of-sight direction.

For this reason, presenting including switching from the presentation of the second presentation data that is based on the two-dimensional image to the presentation of the first presentation data is performed, and thus, in the switching between the two data representing the three-dimensional object, the two data can be switched and presented without causing spatial deviation.

For example, the circuitry further performs: obtaining, from a user, a switching request for switching presentation data. In the presenting, the circuitry performs the presenting including the switching from the presentation of the second presentation data to the presentation of the first presentation data, according to the switching request.

For this reason, switching can be performed at the timing specified by the user.

For example, the circuitry further performs: receiving, from a user, an operation for changing a mode of presentation. In the presenting, the circuitry changes the mode of presentation according to the operation, and performs the presenting including the switching from the presentation of the second presentation data to the presentation of the first presentation data, according to the change.

For this reason, switching can be performed at a timing that is in accordance with the operation by the user.

For example, in the obtaining, the circuitry obtains the encoded data from an encoding device via a communication network. In the presenting, the circuitry performs the presenting including the switching from the presentation of the second presentation data to the presentation of the first presentation data, according to a bandwidth of the communication network.

For this reason, switching can be performed according to the bandwidth of the communication network, and thus, the presenting including switching from a presentation of the second presentation data generated to a presentation of the first presentation data can be performed when the bandwidth of the communication network changes from being lower than a predetermined bandwidth to being higher than or equal to the predetermined band, for example.

For example, in the presenting, the circuitry performs the presenting including the switching from the presentation of the second presentation data to the presentation of the first presentation data, according to an available capacity of the circuitry.

For this reason, switching can be performed according to the available capacity of the circuitry, and thus, the presenting including switching from a presentation of the second presentation data generated to a presentation of the first presentation data can be performed when the available capacity of the circuitry changes from being lower than a predetermined capacity to being higher than or equal to the predetermined capacity, for example.

For example, the encoded data includes synchronization information for synchronizing a coordinate system of the first data and a coordinate system of the second data. In the presenting, the circuitry presents the first presentation data and the second presentation data, based on the synchronization information.

For this reason, the switching from the presentation of the second presentation data to the presentation of the first presentation data can be performed after synchronizing the coordinate systems of the first presentation data and the second presentation data. For this reason, in the switching between the two data representing the three-dimensional object, the two data can be switched and presented without causing spatial deviation.

For example, the circuitry further performs: determining whether a coordinate system of the first data and a coordinate system of the second data are to be synchronized. In the presenting, the circuitry presents the first presentation data and the second presentation data, based on the synchronization information, when the circuitry determines that the coordinate system of the first data and the coordinate system of the second data are to be synchronized.

For this reason, synchronization processing can be performed when required, and synchronization processing can be skipped when not required. Therefore, there is a possibility that the processing load can be reduced.

For example, each of the first data and the second data has a configuration that is common between the first data and the second data.

For this reason, the data amount of encoded data can be reduced. Therefore, communication capacity can be reduced.

For example, the encoded data includes space information for identifying the three-dimensional space in which the three-dimensional object is included. The circuitry further performs: obtaining a target region indicating one region of the three-dimensional space; and identifying, based on the space information, first overlapping data that is part of the first data and overlaps the target region. In the decoding, the circuitry decodes the first overlapping data identified.

For this reason, the volume of data to be obtained can be reduced by obtaining only the first overlapping data, for example. Therefore, communication capacity can be reduced. Furthermore, for example, it is possible to decode only the first overlapping data. Therefore, the processing load can be reduced.

Furthermore, circuitry 1131 may operate like the decoding method illustrated in the flowchart in FIG. 41. FIG. 41 is a flowchart illustrating another example of a decoding method performed by the decoding device.

Circuitry 1131 performs decoding encoding scheme information indicating a second encoding scheme that represents the three-dimensional object and is different from a first encoding scheme of the first data (S1031). Circuitry 1131 performs decoding second data of the second encoding scheme indicated by the encoding scheme information (S1032). The second data is to be used for generating second presentation data for presentation.

Accordingly, since second data of a second encoding scheme indicated by the encoding scheme information obtained by decoding is decoded, it is possible to obtain second data for generating the appropriate second presentation data for presentation.

FIG. 42 is a diagram illustrating an example of the configuration of an encoding device. FIG. 43 is a flowchart illustrating an example of an encoding method performed by the encoding device.

Encoding device 1140 includes circuitry 1141 and memory 1142 coupled to circuitry 1141.

Circuitry 1141 performs the processes described below.

Circuitry 1141 performs generating encoding scheme information indicating a second encoding scheme that represents the three-dimensional object and is different from a first encoding scheme of the first data (S1041). Circuitry 1141 performs generating second data of the second encoding scheme indicating the encoding scheme information (S1042). Circuitry 1141 performs generating a bitstream including the encoding scheme information and the second data (S1043). The second data is to be used in generating second presentation data for presentation.

Accordingly, since a bitstream including encoding scheme information and second data is generated, a decoding device that obtains the bitstream can obtain second data for generating the appropriate second presentation data for presentation.

### [Embodiment 2]

This embodiment describes methods in an application that handles three-dimensional data including, for example, point cloud data, mesh data, and three-dimensional model data, and specifically methods of switching the three-dimensional data, three-dimensional data format, and encoding method, depending on the use case of the application.

A decoding device may decode three-dimensional data of a desired type from encoded data that includes point cloud data, mesh data, and three-dimensional model data simultaneously encoded by the same encoding scheme.

Furthermore, the decoding device may extract and decode three-dimensional data of a desired resolution from encoded data that includes three-dimensional data of different resolutions for each of the types, i.e., point cloud data, mesh data, and three-dimensional model data.

FIG. 44 is a diagram for describing partial decoding for decoding a portion of three-dimensional data in Embodiment 2.

Controller 1202 specifies a portion of three-dimensional data as a portion to be decoded.

Partial decoder 1201 decodes the portion of the three-dimensional data specified by controller 1202. For example, partial decoder 1201 obtains the three-dimensional data from an encoding device and decodes the portion of the obtained three-dimensional data.

FIG. 45 is a diagram for describing an example of extracting and decoding a portion of three-dimensional data in Embodiment 2.

Controller 1212 specifies a portion of three-dimensional data as a portion to be extracted.

Data extractor 1211 extracts the portion of the three-dimensional data specified by controller 1212. For example, data extractor 1211 extracts the portion of the three-dimensional data and transmits the extracted portion of the three-dimensional data to, for example, the decoding device.

Thus, the decoding device can decode the specified portion of the three-dimensional data.

It should be noted that the encoded data may have a hierarchical structure. Hierarchical data indicating the hierarchical structure may be output.

It should be noted that, although the following will mainly describe switching methods involving point cloud data and/or mesh data, the methods are also applicable to three-dimensional model data model. That is, the switching methods may involve switching between/among two or more of three-dimensional data items including point cloud data, mesh data, and three-dimensional model data.

Now, the configuration of server 1220 and terminal 1230 will be described. FIG. 46 is a block diagram illustrating an example of the functional configuration of a server and a terminal in Embodiment 2. It should be noted that server 1220 is, for example, an encoding system that encodes three-dimensional data, and terminal 1230 is a decoding system that decodes and generates three-dimensional data.

Server 1220 includes point cloud generator 1221, mesh generator 1222, point cloud encoder 1223, and multiplexer 1224.

Point cloud generator 1221 generates point cloud data based on at least one of two-dimensional data and three-dimensional data.

Mesh generator 1222 generates mesh data based on the point cloud data generated by point cloud generator 1221.

Point cloud encoder 1223 encodes three-dimensional data that includes the point cloud data generated by point cloud generator 1221 and the mesh data generated by mesh generator 1222.

Multiplexer 1224 multiplexes the encoded three-dimensional data using a predetermined format or a predetermined multiplexing method. It should be noted that multiplexing by multiplexer 1224 does not necessarily need to be performed. If multiplexing is not performed, server 1220 need not include multiplexer 1224. The multiplexed encoded data is transmitted (sent) to terminal 1230.

Terminal 1230 includes controller (application executor) 1231, decoder 1232, and presenter 1233.

Controller 1231 specifies a portion of three-dimensional data to be decoded by decoder 1232. An example of the specified portion of three-dimensional data is three-dimensional data of a certain type (format). Controller 1231 specifies whether point cloud data is to be decoded or mesh data is to be decoded. Controller 1231 may specify three-dimensional data of a certain resolution.

Decoder 1232 decodes, from encoded data received from server 1220, the portion specified by controller 1231. If the decoding of point cloud data is specified by controller 1231, decoder 1232 decodes point cloud data; if the decoding of mesh data is specified by controller 1231, decoder 1232 decodes mesh data. Alternatively, decoder 1232 decodes three-dimensional data of a specified resolution.

Presenter 1233 presents the portion of the three-dimensional data decoded by decoder 1232. If point cloud data is decoded by decoder 1232, presenter 1233 presents the point cloud data; if mesh data is decoded by decoder 1232, presenter 1233 presents the mesh data. Alternatively, decoder 1232 presents three-dimensional data of a specified resolution.

Here, point cloud data, mesh data, and three-dimensional model data are different from one another in resolution, appearance on the display, and granularity. Three-dimensional data that includes at least two of point cloud data, mesh data, and three-dimensional model data may be referred to as hierarchized data.

FIG. 47 is a flowchart illustrating an example of processing performed by the terminal in Embodiment 2.

Controller 1231 determines, based on predetermined processing, the format of three-dimensional data to be used (S1201).

Controller 1231 indicates (specifies), to decoder 1232, the format of the three-dimensional data to be output (presented) (S1202).

Decoder 1232 decodes and outputs the three-dimensional data in the indicated format in a predetermined manner (S1203).

Presenter 1233 uses, in an application, the three-dimensional data in the indicated format in a predetermined manner (S1204). For example, the presenter presents the three-dimensional data.

The following will describe the TriSoup scheme, an exemplary scheme for an encoding device to encode geometry information.

The TriSoup scheme is an irreversible compression scheme for encoding the geometry information of point cloud data in G-PCC encoding scheme. In the TriSoup scheme, an original point cloud being processed is replaced with a set of triangles, and the point cloud is approximated on the surfaces of the triangles. Specifically, the original point cloud is replaced with vertex information on vertices in each node, and the vertices are connected to form a group of triangles. The vertex information for generating the triangles is stored in a bitstream, which is sent to a decoding device.

First, encoding processing according to the TriSoup scheme will be described. FIG. 48 is a diagram illustrating an example of an original point cloud in Embodiment 2. As shown in FIG. 48, point cloud 1242 of an object is in target space 1241 and includes points 1243.

The encoding device begins with dividing the original point cloud into an octree down to a predetermined depth. In octree division, the target space is divided into eight nodes (subspaces), and 8-bit information (an occupancy code) indicating whether each node includes point clouds is generated. A node that includes point clouds is further divided into eight nodes, and 8-bit information indicating whether these eight nodes each include point clouds is generated. This processing is repeated down to a predetermined layer.

Here, typical octree encoding divides nodes until the number of point clouds in each node becomes, for example, one or equal to or less than a threshold. In contrast, the TriSoup scheme performs octree division down to an intermediate layer and not for further layers. Such an octree down to an intermediate layer is called a pruned octree.

FIG. 49 is a diagram illustrating an example of a pruned octree in Embodiment 2. As shown in FIG. 49, point cloud 1242 is divided into leaf nodes 1244 (lowest-layer nodes) of a pruned octree.

The encoding device then performs the following processing for each leaf node 1244 of the pruned octree. It should be noted that a leaf node may hereinafter be referred to simply as a node. The encoding device generates a vertex on an edge of the node as a representative point of a point cloud near the edge. This vertex is called an edge vertex. For example, edge vertices are generated on multiple edges (e.g., four parallel edges), respectively.

FIG. 50 is a diagram illustrating an example of two-dimensional display of leaf node 1244, for example on the xy-plane viewed along the z-direction shown in FIG. 50, in Embodiment 2. As shown in FIG. 50, edge vertices 1252 are generated on edges based on points near the edges, among points 1251 in leaf node 1244.

It should be noted that the dashed lines along the perimeter of leaf node 1244 in FIG. 50 represent the edges. Also in this example, each edge vertex 1252 is generated at a weighted average of the positions of points within the distance 1 from the corresponding edge (points within range 1253 in FIG. 50). It should be noted that the unit of distance may be, by way of example and not limitation, the resolution of the point cloud. Although the distance (the threshold) is 1 in this example, the distance may be a value other than 1 or may be variable.

The encoding device then generates a vertex inside the node as well, based on a point cloud located in the direction of the normal to the plane that includes edge vertices. This vertex is called a centroid vertex.

FIGS. 51 and 52 are diagrams for describing a method of generating a centroid vertex in Embodiment 2. First, the encoding device selects, for example, four points as representative points from a group of edge vertices. In the example shown in FIG. 51, edge vertices v1 to v4 are selected. The encoding device then calculates approximate plane 1261 passing through the four points. The encoding device calculates normal n to approximate plane 1261, and average coordinates M of the four points. The encoding device generates centroid vertex C at weighted-average coordinates of one or more points near the half line extending from average coordinates M along normal n (e.g., points within range 1262 shown in FIG. 52).

The encoding device then entropy-encodes vertex information, which is information on the edge vertices and the centroid vertex, and stores the encoded vertex information in a geometry data unit (hereinafter referred to as a GDU) included in a bitstream. It should be noted that, in addition to the vertex information, the GDU includes information indicating the pruned octree.

FIG. 53 is a diagram illustrating an example of vertex information in Embodiment 2. As shown in FIG. 53, the above processing transforms point cloud 1242 into vertex information 1263.

Next, decoding processing for the bitstream generated as above will be described. First, the decoding device decodes the GDU from the bitstream to obtain the vertex information. The decoding device then connects vertices to generate a TriSoup surface, which is a group of triangles.

FIG. 54 is a diagram illustrating an example of a TriSoup surface in Embodiment 2. In the example shown in FIG. 54, four edge vertices v1 to v4 and centroid vertex C are generated based on the vertex information. Furthermore, triangles 1271 (a TriSoup surface) are generated, each having centroid vertex C and two edge vertices as its vertices. For example, a pair of two edge vertices is selected on each pair of two adjacent edges to form triangle 1271, which has the selected pair of edge vertices and the centroid vertex as its vertices.

FIG. 55 is a diagram for describing point cloud restoration processing in Embodiment 2. The above processing is performed for each leaf node to generate a three-dimensional model in which the object is represented by triangles 1271, as shown in FIG. 55.

The decoding device then generates points 1272 (face vertices) at regular intervals on the surfaces of triangles 1271 to restore the geometry information of point cloud 1273.

Use cases of the TriSoup scheme may allow outputting point cloud data or mesh data of different resolutions, in addition to outputting point cloud data. The following will describe a decoder capable of decoding and outputting point cloud data or mesh data of a desired resolution, depending on such a use case. The following description illustrates an example of decoding data encoded by the TriSoup scheme in G-PCC, which is an exemplary compression scheme for point cloud data. However, the following description is also applicable to decoding mesh data compressed by schemes such as V-DMC and Draco.

FIG. 56 is a diagram illustrating an example of the configuration of a decoder in Embodiment 2.

Decoder 1232 includes mesh vertex generator 1281, additional-information decoder for high resolution 1282, additional vertex generator/corrector 1283, additional vertex generator/corrector 1284, first connection information generator 1285, additional-information decoder for point cloud generation 1286, point generator 1287, second connection information generator 1288, third connection information generator 1289, and point generator 1290.

Mesh vertex generator 1281 decodes a bitstream to obtain information on vertices (edge vertices) forming faces.

Additional-information decoder for high resolution 1282 decodes, from the bitstream, additional information for restoring additional vertices to be used for increasing the resolution of the faces. For example, in Triangle-soup, the vertices forming the faces are edge vertices of each node, and the additional vertices are a centroid point (a centroid vertex) inside each node and points (face vertices) on the faces of each node.

Additional vertex generator/corrector 1283 restores (generates) additional vertices forming the faces. For example, additional vertex generator/corrector 1283 restores (generates) points inside the nodes, such as a centroid point (a centroid vertex) inside each node, based on the edge vertices and enhancement information for restoring centroid points. Thus, additional vertex generator/corrector 1283 increases the resolution of the faces.

Additional vertex generator/corrector 1284 further restores (generates) additional vertices forming the faces based on the edge vertices, the centroid points, and enhancement information for restoring face vertices. For example, additional vertex generator/corrector 1284 restores (generates) points (face vertices) on the faces of each node.

It should be noted that additional vertex generators/correctors 1283 and 1284 may, after restoring the points, correct the restored points in a predetermined manner.

First connection information generator 1285 configures each face by connecting a pair of points among the restored points in a predetermined manner. Thus, first connection information generator 1285 generates first connection information indicating connection relationships between the restored points forming the faces.

Additional-information decoder for point cloud generation 1286 decodes, from the bitstream, enhancement information for restoring a point cloud.

Based on the faces configured by first connection information generator 1285 and the enhancement information decoded by additional-information decoder for point cloud generation 1286, point generator 1287 generates points in a predetermined manner and outputs the points. Thus, a point cloud is output.

Here, the edge vertices generated by mesh vertex generator 1281 are points forming low-resolution faces. The points inside the nodes generated by additional vertex generator/corrector 1283 are points forming middle-resolution faces. The face vertices generated by additional vertex generator/corrector 1284 are points forming high-resolution faces.

Decoder 1232 may output high-resolution face information (the points forming the faces, and the first connection information) generated in the processing performed by additional vertex generator/corrector 1284 and the processing performed by first connection information generator 1285.

Based on the points forming the middle-resolution faces output by additional vertex generator/corrector 1283, second connection information generator 1288 connects the restored points in a predetermined manner to generate second connection information indicating connection relationships between the restored points. Decoder 1232 may output middle-resolution face information (the points forming the faces, and the second connection information) generated in the processing performed by additional vertex generator/corrector 1283 and the processing performed by second connection information generator 1288.

Based on the points forming the low-resolution faces output by mesh vertex generator 1281, third connection information generator 1289 connects the restored points in a predetermined manner to generate third connection information indicating connection relationships between the restored points. Decoder 1232 may output low-resolution face information (the points forming the faces, and the third connection information) generated in the processing performed by mesh vertex generator 1281 and the processing performed by third connection information generator 1289.

Fourth connection information generator 1291 performs processing of further removing points from the points forming the low-resolution faces output by mesh vertex generator 1281. Based on the points forming the faces of a resolution further lower than that of the low-resolution faces, fourth connection information generator 1291 connects the restored points in a predetermined manner to generate fourth connection information indicating connection relationships between the restored points. Decoder 1232 may output further-lower-resolution face information (a parent node mesh) generated in the processing performed by mesh vertex generator 1281 and the processing performed by fourth connection information generator 1291.

Based on the low-resolution faces output by mesh vertex generator 1281, point generator 1290 generates points in a predetermined manner and outputs the points. Thus, a point cloud is output. The point cloud output by point generator 1290 is a low-resolution point cloud of a resolution lower than that of the point cloud output by point generator 1287.

It should be noted that decoder 1232 may include, in addition to point generator 1287 and point generator 1290, point generators that restore points for forming faces of further different resolutions. Thus, decoder 1232 may output point clouds of different resolutions.

As above, in decoding, decoder 1232 may generate face information on high-resolution faces by increasing the number of points for restoring the faces, or may generate face information on low-resolution faces using fewer points obtained by decoding.

Decoder 1232 may output point cloud data of different resolutions or mesh data of different resolutions. An application may then select and use point cloud data or mesh data of a desired resolution. Alternatively, controller 1231 may specify the resolution or the type (point cloud data, mesh data, or three-dimensional model data) of three-dimensional data, and decoder 1232 may decode three-dimensional data of the specified type. In this case, processing of decoding or replaying data other than the specified data may be skipped. This can reduce the processing load.

It should be noted that the application may use multiple three-dimensional data items by superimposing the data items, or decoder 1232 may output data in which multiple three-dimensional data items are superimposed. The multiple three-dimensional data items here may be three-dimensional data items of different types or resolutions.

FIG. 57 is a diagram illustrating an example of the syntax of metadata (SEI) of available output formats in Embodiment 2.

The encoder transmits, in a bitstream, metadata (SEI) indicating the formats included in encoded data, i.e., output formats available to the decoder. The decoder can analyze this metadata to know the output formats available to the decoder. Decoder 1232 may output, to controller (application executor) 1231, the metadata indicating the available output formats. For example, for spatially divided encoded data, the metadata may indicate available output formats for each divided space.

num_output_format indicates the number of available output formats. format_type indicates the types of the available output formats.

It should be noted that the metadata may omit indicating default output formats and only indicate optionally available output formats.

Controller (application executor) 1231 refers to the metadata to identify the available output formats and determine an output format among the available output formats. Controller 1231 indicates the determined format to the decoding device.

It should be noted that, if the decoding device is capable of outputting multiple three-dimensional data items superimposed, a flag may be signaled indicating the ability of the decoding device to output multiple three-dimensional data items superimposed. Alternatively, the format types of output three-dimensional data items to be superimposed may be signaled. That is, the metadata may indicate the above flag or format types. The metadata may indicate a format type indicating a combination of available output formats.

Furthermore, format_type may be a flag composed of bits, each indicating whether a predetermined format is available for output.

FIG. 58 is a diagram illustrating an example of format_type in Embodiment 2. FIG. 59 is a diagram illustrating another example of format_type in Embodiment 2.

It should be noted that format_type illustrated is exemplary and not limiting. The syntax may use only some of the exemplary types in FIGS. 58 and 59, use types not illustrated, or reorder the types.

Now, details of the processing at step S1203 described with reference to FIG. 47 will be described. FIG. 60 is a flowchart illustrating an example of detailed processing of decoding three-dimensional data in an indicated format in a predetermined manner in Embodiment 2.

Decoder 1232 determines the output format indicated by controller 1231 (S1211). Decoder 1232 determines whether the indicated output format is low-resolution mesh data, high-resolution mesh data, or point cloud data.

If the output format is low-resolution mesh data, decoder 1232 decodes edge vertices (S1212). For example, based on point cloud data, decoder 1232 restores (generates) faces (the mesh of TriSoup nodes) and restores (generates) vertices (edge vertices) forming the faces.

Decoder 1232 generates low-resolution mesh data by generating connection information based on the edge vertices (S1213). For example, based on the points forming the low-resolution faces, decoder 1232 connects the restored points in a predetermined manner to generate third connection information indicating connection relationships between the restored points. Decoder 1232 thus generates low-resolution mesh data (low-resolution face information).

Decoder 1232 outputs the generated low-resolution mesh data (S1214).

If the output format is high-resolution mesh data, decoder 1232 decodes edge vertices (S1215). For example, based on the point cloud data, decoder 1232 restores (generates) faces (the mesh of TriSoup nodes) and restores (generates) vertices (edge vertices) forming the faces.

Decoder 1232 generates high-resolution mesh data by decoding a centroid point (a centroid vertex) inside each node or face vertices on the faces of each node, and generating connection information based on the decoded vertices (the edge vertices, the centroid points, and the face vertices) (S1216). For example, based on the points forming the high-resolution faces, decoder 1232 connects the restored points in a predetermined manner to generate first connection information indicating connection relationships between the restored points. Decoder 1232 thus generates high-resolution mesh data (high-resolution face information).

Decoder 1232 outputs the generated high-resolution mesh data (S1217).

If the output format is point cloud data, decoder 1232 decodes edge vertices (S1218). For example, based on the point cloud data, decoder 1232 restores (generates) faces (the mesh of TriSoup nodes) and restores (generates) vertices (edge vertices) forming the faces.

Decoder 1232 generates high-resolution mesh data by decoding a centroid point (a centroid vertex) inside each node or face vertices on the faces of each node, and generating connection information based on the decoded vertices (the edge vertices, the centroid points, and the face vertices) (S1219). For example, based on the points forming the high-resolution faces, decoder 1232 connects the restored points in a predetermined manner to generate first connection information indicating connection relationships between the restored points. Decoder 1232 thus generates high-resolution mesh data (high-resolution face information).

Decoder 1232 generates point cloud data based on the high-resolution mesh data (S1220).

Decoder 1232 outputs the generated point cloud data (S1221).

Now, another configuration of server 1300 and terminal 1310 will be described. FIG. 61 is a block diagram illustrating another example of the functional configuration of the server and the terminal in Embodiment 2.

Server 1300 includes point cloud generator 1301, mesh generator 1302, point cloud encoder 1303, multiplexer 1304, and data extractor 1305.

Point cloud generator 1301 generates point cloud data based on at least one of two-dimensional data and three-dimensional data.

Mesh generator 1302 generates mesh data based on the point cloud data generated by point cloud generator 1301.

Point cloud encoder 1303 encodes three-dimensional data that includes the point cloud data generated by point cloud generator 1301 and the mesh data generated by mesh generator 1302.

Multiplexer 1304 multiplexes the encoded three-dimensional data using a predetermined format or a predetermined multiplexing method. It should be noted that multiplexing by multiplexer 1304 does not necessarily need to be performed. If multiplexing is not performed, server 1300 need not include multiplexer 1304.

Data extractor 1305 extracts, from the encoded data generated by multiplexer 1304, a portion specified by terminal 1310. Data extractor 1305 then transmits (sends), to terminal 1310, the extracted portion of the three-dimensional data, or three-dimensional data resulting from re-multiplexing the extracted portion of the three-dimensional data.

Terminal 1310 includes controller (application executor) 1311, decoder 1312, and presenter 1313.

Controller 1311 specifies a portion of three-dimensional data to be transmitted from server 1300. An example of the specified portion of the three-dimensional data is three-dimensional data of a certain type (format). Controller 1311 specifies whether point cloud data is to be extracted or mesh data is to be extracted. Controller 1311 may specify three-dimensional data of a certain resolution.

Decoder 1312 decodes the portion of the three-dimensional data based on encoded data received from server 1300. Decoder 1312 may receive only a portion of the three-dimensional data from server 1300, or may receive the entire three-dimensional data. If decoder 1312 receives the entire three-dimensional data, decoder 1312 decodes a portion of the entire three-dimensional data. In other words, server 1300 may transmit only a portion of the three-dimensional data to terminal 1310, or may transmit the entire three-dimensional data to terminal 1310.

Presenter 1313 presents the portion of the three-dimensional data decoded by decoder 1312.

Here, point cloud data, mesh data, and three-dimensional model data are different from one another in resolution, appearance on the display, and granularity. Three-dimensional data that includes at least two of point cloud data, mesh data, and three-dimensional model data may be referred to as hierarchized data.

FIG. 62 is a flowchart illustrating another example of processing performed by the terminal in Embodiment 2.

Controller 1311 determines, based on predetermined processing, the format of three-dimensional data to be used, and requests the server to switch to the determined format (S1301).

Server 1300 extracts and transmits the three-dimensional data in the requested format (S1302).

Decoder 1312 decodes and outputs the transmitted three-dimensional data in the requested format (S1303).

Presenter 1313 uses the decoded three-dimensional data in an application (S1304). For example, the presenter presents the three-dimensional data.

The following will describe a data unit structure that stores encoded data of different resolutions, enabling partial decoding of three-dimensional data, or enabling switching of the decoding and output among different resolutions. FIG. 63 is a diagram illustrating an example of the structure of a data unit in Embodiment 2.

A data unit includes encoded data in the order of resolution. It should be noted that low-resolution data includes points that constitute low-resolution mesh data, and data or metadata for restoring connection information. High-resolution data includes points that constitute high-resolution mesh data, and data or metadata for restoring connection information. Point information includes data or metadata for restoring points that constitute point cloud data.

In the example in FIG. 63, "Low resolution" represents encoded data for decoding low-resolution three-dimensional data. In a TriSoup example, "Low resolution" is encoded data for restoring the edge vertices of each node. "High resolution" represents enhancement information (additional information for high resolution) for restoring high-resolution three-dimensional data. In a TriSoup example, "High resolution" is encoded data for restoring additional vertices. "Point information" represents enhancement information (additional information for point cloud generation) for restoring point information. In a TriSoup example, "Point information" is encoded data for restoring points.

For example, to output only low-resolution data, decoder 1232 reads, from the encoded data, the header of the data unit and the low-resolution data in the data unit, and performs decoding. In this case, decoder 1232 need not read the high-resolution data and the point-information data.

The above configuration eliminates the need to read subsequent data such as the high-resolution data and the point-information data. This can reduce the time required for starting the decoding, achieving low-latency decoding. In addition, the elimination of the need for subsequent processing can increase the processing speed.

Similarly, to output high-resolution data, decoder 1232 reads, from the encoded data, the header of the data unit, the low-resolution data in the data unit, and the high-resolution data in the data unit, and performs decoding with both the low-resolution data and the high-resolution data. That is, decoder 1232 cannot perform decoding only with the high-resolution data and without the low-resolution data. In this case, decoder 1232 need not read the point information; this achieves advantageous effects similar to the above case. That is, subsequent data does not need to be read, and this can reduce the time required for starting the decoding, achieving low-latency decoding. In addition, the elimination of the need for subsequent processing can increase the processing speed.

Now, an encoding scheme unit will be described. FIG. 64 is a diagram illustrating an example of the syntax of an encoding scheme unit in Embodiment 2. FIG. 65 is a diagram illustrating an example of type information in Embodiment 2.

To enable the configuration or processing described with reference to FIG. 63, the header of an encoding scheme unit stores type information (unit_type) for identifying data unit types. For example, the type information indicates types that indicate the resolutions of the three-dimensional data.

By analyzing unit_type in the header of the encoding scheme unit, the decoding device can identify the resolutions of the encoded data and determine decoding processing.

It should be noted that the types that identify the resolutions may be indicated by identifiers. The types may be stored in the header of a unit different from the encoding scheme unit, for example, the header or metadata of the data unit.

It should be noted that unit_type illustrated in FIG. 65 is exemplary and not limiting. The syntax may use only some of the exemplary types in FIG. 65, use types not illustrated, or reorder the types.

Now, data unit structures for partial transmission will be described. FIGS. 66 to 68 are diagrams illustrating examples of data unit structures for partial transmission in Embodiment 2.

In the data unit structures shown in the examples in FIGS. 67 and 68, data items corresponding to different resolutions are stored in the order of resolution in the respective data units, each including a header and encoded data. This allows extracting only a desired data unit.

Furthermore, as in FIG. 66, only a desired data unit can be extracted to form a file. This eliminates the need to transmit subsequent data units, thus advantageously reducing the volume of transmitted data. This accordingly eliminates the need to decode the subsequent data units, thus advantageously reducing the processing load.

For example, to allow high-resolution data to be decoded, a low-resolution data unit and an enhancement-information data unit for high resolution are extracted and transmitted to the decoding device, as shown in FIG. 67. To allow high-resolution point cloud data to be decoded, a low-resolution data unit, a high-resolution data unit, and a point-information data unit are extracted and transmitted to the decoding device.

Now, an encoding scheme unit for partial transmission will be described. FIG. 69 is a diagram illustrating an example of the syntax of an encoding scheme unit for partial transmission in Embodiment 2. FIG. 70 is a diagram illustrating an example of type information for partial transmission in Embodiment 2.

To enable the configuration or processing described with reference to FIGS. 66 to 68, the header of an encoding scheme unit stores type information (unit_type) for identifying a data unit type. For example, the type information indicates a type that indicates the resolution of the three-dimensional data.

Based on the data type, the decoding device determines the decoding method. For example, the decoding device determines the decoding method based on a type indicating the resolution of the three-dimensional data, or, if the data is hierarchized, based on a type indicating additional information. The type may be indicated by a flag that indicates whether the data is hierarchized. Based on the type information (unit_type), the decoding device can identify that the encoded data includes items of the same three-dimensional data and thus can decode the three-dimensional data.

It should be noted that unit_type illustrated in FIG. 70 is exemplary and not limiting. The syntax may use only some of the exemplary types in FIG. 70, use types not illustrated, or reorder the types.

Now, group IDs will be described. FIG. 71 is a diagram for describing group IDs in Embodiment 2.

A group ID is an identifier for identifying hierarchical data items generated from the same three-dimensional point cloud. A group ID may be stored in the header of an encoding unit, or in the header of a data unit. Thus, the encoding device that encodes hierarchical data can determine which data units are to be combined in decoding.

A group ID may indicate data units belonging to the same group. Alternatively, the data unit ID of a corresponding or referential low-resolution data may be indicated in a high-resolution data unit. Using such a method of indicating a correspondence will achieve the same advantageous effect.

For example, to decode a high-resolution three-dimensional point cloud with group ID = 1, the decoding device can analyze the header to extract and decode a data unit with unit_type = 6 (geometry of full encoded low-resolution data) and group ID = 1, and a data unit with unit_type = 9 (encoded geometry information for high-resolution enhancement) and group ID = 1.

FIG. 72 is a diagram illustrating an example of the configuration of a decoding device in Embodiment 2. FIG. 73 is a flowchart illustrating an example of a decoding method performed by the decoding device in Embodiment 2.

Decoding device 1320 includes circuitry 1321 and memory 1322 coupled to circuitry 1321.

Circuitry 1321 performs the processes described below.

Circuitry 1321 obtains encoded data (S1311). Circuitry 1321 restores first vertices based on the encoded data (S1312). Circuitry 1321 generates first face information (fourth connection information) including a first face by connecting the first vertices restored (S1313). Circuitry 1321 restores second vertices based on the encoded data and the first face (S1314). Circuitry 1321 generates second face information (first connection information) including a second face by connecting a point cloud including the first vertices restored and the second vertices restored (S1315). Circuitry 1321 outputs the first vertices, the second vertices, the first face information, and the second face information (S1316).

Thus, low-resolution information that includes the first vertices and the first face information and high-resolution information that includes the second vertices and the second face information are generated in two steps and output. This enables, for example, outputting low-resolution three-dimensional data based on the low-resolution information, or outputting high-resolution three-dimensional data of a resolution higher than that of the low-resolution three-dimensional data, based on both the low-resolution information and the high-resolution information.

For example, circuitry 1321 further generates, based on the second face, point cloud data including points. Circuitry 1321 outputs the point cloud data.

For example, the encoded data includes: first encoded data including the first vertices and the first face information; and second encoded data including enhancement information for decoding the second vertices and the second face.

For example, the encoded data includes a header and a data unit. The data unit includes the first encoded data and the second encoded data in order.

For example, the encoded data includes: a first data unit including a first header and the first encoded data; and a second data unit including a second header and the second encoded data.

For example, circuitry 1321 further: partly decodes the first encoded data and the second encoded data, and outputs decoded one of (i) the first encoded data or (ii) the first encoded data and the second encoded data.

For example, circuitry 1321 further: obtains number information indicating a total number of available formats. Circuitry 1321 determines, based on the number information, data to be output.

For example, circuitry 1321 further obtains type information indicating a type of an available format. Circuitry 1321 further determines, based on the type information, data to be output.

For example, circuitry 1321 further obtains one of (i) the first encoded data or (ii) the first encoded data and the second encoded data. Circuitry 1321 further decodes and outputs obtained one of (i) the first encoded data or (ii) the first encoded data and the second encoded data.

FIG. 74 is a diagram illustrating an example of the configuration of an encoding device in Embodiment 2. FIG. 75 is a flowchart illustrating an example of an encoding method performed by the encoding device in Embodiment 2.

Encoding device 1330 includes circuitry 1331 and memory 1332 coupled to circuitry 1331.

Circuitry 1331 performs the processes described below.

Circuitry 1331 determines first vertices of a three-dimensional object (S1321). Circuitry 1331 generates first face information including a first face by connecting the first vertices (S1322). Circuitry 1331 determines second vertices based on the first face (S1323). Circuitry 1331 generates second face information including a second face by connecting a point cloud including the first vertices and the second vertices (S1324). Circuitry 1331 generates encoded data including the first vertices, the second vertices, the first face information, and the second face information (S1325).

Thus, the encoding device outputs the encoded data obtained in two steps by generating low-resolution information that includes the first vertices and the first face information and high-resolution information that includes the second vertices and the second face information. A decoding device that obtains the encoded data can therefore output, for example, low-resolution three-dimensional data based on the low-resolution information, or high-resolution three-dimensional data of a resolution higher than that of the low-resolution three-dimensional data, based on both the low-resolution information and the high-resolution information.

For example, circuitry 1331 further generates, based on the second face, point cloud data including points. The encoded data further includes the point cloud data.

For example, circuitry 1331 further generates first encoded data including the first vertices and the first face information. Circuitry 1331 further generates second encoded data including the second vertices and the second face information. The encoded data includes the first encoded data and the second encoded data. Thus, the decoding device that obtains the encoded data can restore three-dimensional data items of different resolutions.

For example, the encoded data includes a header and a data unit. The data unit includes the first encoded data and the second encoded data in order. In other words, the data unit includes the first encoded data and the second encoded data in the stated order.

For example, the encoded data includes: a first data unit including a first header and the first encoded data; and a second data unit including a second header and the second encoded data.

For example, the encoded data includes number information indicating a total number of available formats.

For example, the encoded data includes type information indicating a type of an available format.

For example, circuitry 1331 further outputs one of (i) the first encoded data or (ii) the first encoded data and the second encoded data.

Furthermore, circuitry 1321 of decoding device 1320 and circuitry 1331 of encoding device 1330 may operate like the method illustrated in the flowchart in FIG. 76. FIG. 76 is a flowchart illustrating an example of a method performed by the decoding device or the encoding device in Embodiment 2.

Circuitry 1321 or circuitry 1331 determines a type of three-dimensional data to be decoded (S1331). Circuitry 1321 or circuitry 1331 extracts, from encoded data, three-dimensional data of the type determined (S1332). The encoded data includes: (i) first vertices of a three-dimensional object; (ii) first face information including a first face generated by connecting the first vertices; (iii) second vertices determined based on the first face; and (iv) a second face generated by connecting a point cloud including the first vertices and the second vertices. The type of three-dimensional data to be extracted includes a first format and a second format. When the type of three-dimensional data to be decoded is determined to be the first format, first encoded data including the first vertices and the first face information is extracted. When the type of three-dimensional data to be decoded is determined to be the second format, second encoded data including enhancement information for decoding the second vertices and the second face is extracted.

Thus, encoded data necessary for decoding can be extracted based on the determined format. Selecting a format requiring less data amount for decoding can therefore reduce data amount to be extracted. This enables, for example, reducing data traffic for transmitting the encoded data, and reducing the processing load of decoding processing performed by a decoding device that obtains the encoded data.

A three-dimensional data encoding device, a three-dimensional data decoding device, and the like, according to embodiments of the present disclosure have been described above, but the present disclosure is not limited to these embodiments.

It should be noted that each of the processing units included in the encoding device, the decoding device, the server, the terminal, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the structural components may be implemented as dedicated hardware or may be realized by executing a software program suited to such structural components. Alternatively, the structural components may be implemented by a program executor such as a CPU or a processor reading out and executing the software program recorded in a recording medium such as a hard disk or a semiconductor memory.

Furthermore, the present disclosure may be implemented as a decoding method, and the like, that is executed by the decoding device, and the like.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining structural components in different embodiments, without materially departing from the spirit of the present disclosure.

### [Industrial Applicability]

The present disclosure is applicable to a decoding device and a decoding method.

### [Reference Signs List]

- 1001: three-dimensional data encoding system
- 1002: three-dimensional data decoding system
- 1003: sensor terminal
- 1004: external connector
- 1011: three-dimensional data generation system
- 1012: presenter
- 1013: encoder
- 1014: multiplexer
- 1015: input/output unit
- 1016: controller
- 1017: sensor information obtainer
- 1018: three-dimensional data generator
- 1021: sensor information obtainer
- 1022: input/output unit
- 1023: demultiplexer
- 1024: decoder
- 1025: presenter
- 1026: user interface
- 1027: controller
- 1031: three-dimensional model learner
- 1032: three-dimensional model encoder
- 1033: three-dimensional model decoder
- 1034: rendering reconstructor
- 1041: data divider
- 1042: encoder
- 1051: decoder
- 1052: data merger
- 1061: terminal presentation screen
- 1061a: point cloud button
- 1061b: mesh button
- 1062: terminal presentation screen
- 1063: terminal presentation screen
- 1070: server
- 1071: data generator
- 1072: point cloud generator
- 1073: mesh generator
- 1074: model generator
- 1075: synchronizer
- 1076: point cloud encoder
- 1077: mesh encoder
- 1078: model encoder
- 1079: multiplexer
- 1080: data extractor
- 1090: terminal
- 1091: controller
- 1092: decoder
- 1093: presenter
- 1101: point cloud sensor
- 1102: camera
- 1110: data generator
- 1111: point cloud generator
- 1112: mesh generator
- 1113: model generator
- 1120: terminal
- 1121: decoder
- 1122: synchronizing presenter
- 1130: decoding device
- 1131: circuitry
- 1132: memory
- 1140: encoding device
- 1141: circuitry
- 1142: memory
- 1201: partial decoder
- 1202: controller
- 1211: data extractor
- 1212: controller
- 1220: server
- 1221: point cloud generator
- 1222: mesh generator
- 1223: point cloud encoder
- 1224: multiplexer
- 1230: terminal
- 1231: controller (application executor)
- 1232: decoder
- 1233: presenter
- 1241: target space
- 1242: point cloud
- 1243: point
- 1244: leaf node
- 1251: point
- 1252: edge vertex
- 1253: range
- 1261: approximate plane
- 1262: range
- 1263: vertex information
- 1271: triangle
- 1272: point
- 1273: point cloud
- 1281: mesh vertex generator
- 1282: additional-information decoder for high resolution
- 1283: corrector
- 1284: corrector
- 1285: first connection information generator
- 1286: additional-information decoder for point cloud generation
- 1287: point generator
- 1288: second connection information generator
- 1289: third connection information generator
- 1290: point generator
- 1291: fourth connection information generator
- 1300: server
- 1301: point cloud generator
- 1302: mesh generator
- 1303: point cloud encoder
- 1304: multiplexer
- 1305: data extractor
- 1310: terminal
- 1311: controller (application executor)
- 1312: decoder
- 1313: presenter
- 1320: decoding device
- 1321: circuitry
- 1322: memory
- 1330: encoding device
- 1331: circuitry
- 1332: memory

## Claims

1. A decoding device comprising:
circuitry; and
memory coupled to the circuitry, wherein
in operation, the circuitry:
obtains encoded data;
restores first vertices based on the encoded data;
generates first face information including a first face by connecting the first vertices restored;
restores second vertices based on the encoded data and the first face;
generates second face information including a second face by connecting a point cloud including the first vertices restored and the second vertices restored; and
outputs the first vertices, the second vertices, the first face information, and the second face information.

2. The decoding device according to claim 1, wherein
the circuitry further:
generates, based on the second face, point cloud data including points; and
outputs the point cloud data.

3. The decoding device according to claim 1, wherein
the encoded data includes: first encoded data including the first vertices and the first face information; and second encoded data including enhancement information for decoding the second vertices and the second face.

4. The decoding device according to claim 3, wherein
the encoded data includes a header and a data unit, and
the data unit includes the first encoded data and the second encoded data in order.

5. The decoding device according to claim 3, wherein
the encoded data includes: a first data unit including a first header and the first encoded data; and a second data unit including a second header and the second encoded data.

6. The decoding device according to claim 3, wherein
the circuitry further:
partly decodes the first encoded data and the second encoded data, and outputs decoded one of (i) the first encoded data or (ii) the first encoded data and the second encoded data.

7. The decoding device according to claim 6, wherein
the circuitry further:
obtains number information indicating a total number of available formats; and
determines, based on the number information, data to be output.

8. The decoding device according to claim 6, wherein
the circuitry further:
obtains type information indicating a type of an available format; and
determines, based on the type information, data to be output.

9. The decoding device according to claim 3, wherein
the circuitry further:
obtains one of (i) the first encoded data or (ii) the first encoded data and the second encoded data; and
decodes and outputs obtained one of (i) the first encoded data or (ii) the first encoded data and the second encoded data.

10. An encoding device comprising:
circuitry; and
memory coupled to the circuitry, wherein
in operation, the circuitry:
determines first vertices of a three-dimensional object;
generates first face information including a first face by connecting the first vertices;
determines second vertices based on the first face;
generates second face information including a second face by connecting a point cloud including the first vertices and the second vertices; and
generates encoded data including the first vertices, the second vertices, the first face information, and the second face information.

11. The encoding device according to claim 10, wherein
the circuitry further:
generates, based on the second face, point cloud data including points, and
the encoded data further includes the point cloud data.

12. The encoding device according to claim 10, wherein
the circuitry further:
generates first encoded data including the first vertices and the first face information; and
generates second encoded data including the second vertices and the second face information, and
the encoded data includes the first encoded data and the second encoded data.

13. The encoding device according to claim 12, wherein
the encoded data includes a header and a data unit, and
the data unit includes the first encoded data and the second encoded data in order.

14. The encoding device according to claim 12, wherein
the encoded data includes: a first data unit including a first header and the first encoded data; and a second data unit including a second header and the second encoded data.

15. The encoding device according to claim 14, wherein
the encoded data further includes number information indicating a total number of available formats.

16. The encoding device according to claim 14, wherein
the encoded data further includes type information indicating a type of an available format.

17. The encoding device according to claim 12, wherein
the circuitry further:
outputs one of (i) the first encoded data or (ii) the first encoded data and the second encoded data.

18. A decoding method comprising:
restoring first vertices based on encoded data;
generating first face information including a first face by connecting the first vertices restored;
restoring second vertices based on the encoded data and the first face;
generating second face information including a second face by connecting a point cloud including the first vertices restored and the second vertices restored; and
outputting the first vertices, the second vertices, the first face information, and the second face information.

19. An encoding method comprising:
determining first vertices of a three-dimensional object;
generating first face information including a first face by connecting the first vertices;
determining second vertices based on the first face;
generating second face information including a second face by connecting a point cloud including the first vertices and the second vertices; and
generating encoded data including the first vertices, the second vertices, the first face information, and the second face information.

20. A device comprising:
circuitry; and
memory coupled to the circuitry, wherein
in operation, the circuitry:
determines a type of three-dimensional data to be decoded; and
extracts, from encoded data, three-dimensional data of the type determined,
the encoded data includes: (i) first vertices of a three-dimensional object; (ii) first face information including a first face generated by connecting the first vertices; (iii) second vertices determined based on the first face; and (iv) a second face generated by connecting a point cloud including the first vertices and the second vertices,
the type of three-dimensional data to be extracted includes a first format and a second format,
when the type of three-dimensional data to be decoded is determined to be the first format, first encoded data including the first vertices and the first face information is extracted, and
when the type of three-dimensional data to be decoded is determined to be the second format, second encoded data including enhancement information for decoding the second vertices and the second face is extracted.
